# EUROPEAN PATENT APPLICATION

(11) **EP 3 557 413 A1**
(43) Date of publication of application: **23.10.2019**
(21) Application number: 18168627.0
(22) Date of filing: 20.04.2018
(51) Int. Cl.: G06F 9/445, G06F 9/46, G06F 9/48, G06F 8/52, G06F 9/50

(54) **INSTRUCTION PROCESSING SYSTEM AND METHOD**

(71) Applicant: Hivemind Technologies Limited, London EC4M 7EG (GB)
(72) Inventor: RIAZ, Karim, London EC4M 7AN (GB); GILSON, Christian, London EC4M 7AN (GB); MITCHELL, Daniel, London EC4M 7AN (GB); CROSS, Geoffrey, London EC4M 7AN (GB)
(74) Representative: Ahmad, Sheikh Shakeel

(57) **Abstract**

An instruction processing system for processing instructions (50) received from a remotely located instructing system (12A), wherein each instruction comprises a plurality of tasks, a confidence level parameter (66) associated with each task and a maximum number of iterations parameter (68), each task requiring a plurality of instances of the task to be processed in order to make a determination of confidence in the results of the processing the task, is described. The instruction processing system included an iteration allocation system (10) for processing the instruction (50) which uses a remotely located pool of distributed data processors (16A, 16B, 16C) operatively coupled to the iteration allocation system (10) for processing an instance of at least one of the plurality of tasks. The iteration allocation system comprises: a multi-part instruction handler (30) arranged to divide the received instruction into the plurality of tasks and to forward each task to an iteration creation system (32) for processing each task separately; the iteration creation system (32) for processing a received task to create a plurality of task iteration instruction records (80) each representing an instance of the task, a selective access queuing system (34) for temporarily holding all task iteration instruction records (80) and selectively providing one of the task iteration instruction records (80) to a requesting processor (16A; 16B; 16C) of the pool of distributed data processors (16A, 16B, 16C); a results processing system (40) for processing received results of task iteration instruction records processed by the pool of distributed data processors (16A, 16B, 16C), wherein the results processing system (40) comprises: a task results receipt processor (230) for receiving the results of a processed task iteration instruction record (80) and storing the results in a results database (42); an agreement verification processor (232) arranged to: determine a current confidence level value associated with the degree of agreement between all of the results of received task iteration instruction records (80) relating to the same task; compare the current confidence level value with the confidence level parameter (66) of that task; change a task status parameter of the associated task to 'completed' and store the same in the results database (42) if the current confidence level meets the value of the required confidence level parameter (66); change a task status parameter of the associated task to 'failed' and store the same in the results database (42) if the current confidence level does not meet the value of the required confidence level parameter (66) and the maximum number of iterations (68) for the associated task have been carried out; and generate an new iteration instruction for the creation of a new task iteration record if the current confidence level does not meet the value of the required confidence level parameter (66) and the maximum number of iterations (68) for the associated task has not been carried out; a supplementary task iteration generation processor (236) for generating new task iteration records (80), the supplementary task iteration generation processor (236) being responsive to receiving the new iteration instruction from the agreement verification processor (232), to create the new task iteration record and pass the new task iteration record (80) to the selective access queuing system (34); and a results request handler (44) configured to receive requests from an instruction generation source (12A, 12B, 12C) for the results of a particular processed instruction, retrieve the results of a processed instructions and provide the results to the instruction generation source.

## Description

### Field of the Invention

The present invention concerns an instruction processing system which comprises an iteration allocation system and a plurality of associated processors which are typically independent of the allocation system. Use of such distributed processing resources is popular as it enables the system to be rapidly scalable and minimises processing overhead and cost. More particularly, though not exclusively, the present invention is applicable to machine learning applications where machine interpretation of data is required and different processors may provide different results for the same processing task, for example image classification tasks.

### Background of the Invention

Modern processing systems are typically designed to receive instructions from a plurality of instruction generation sources, and typically instructions received from each source may comprise instructions to complete a variety of different tasks which depend upon the instruction generation source. Such tasks may comprise activities ranging from simple numerical analysis, to more complex tasks such as image recognition. Correspondingly, different processing systems able to process certain tasks more efficiently than others in dependence upon the setup of the processor. It is therefore typically desirable to ensure that the correct tasks are allocated to a processor which is able to most efficiently carry out the task. Furthermore, having a plurality of different processors available for task processing is highly desirable in order to provide efficiency in task processing. This is particularly the case where an instruction is a large or complex instruction comprised of multiple tasks. In this case a single large instruction task sent by an instruction generation source may in fact be more accurately described as a concatenation of a plurality of smaller discrete tasks. In such scenarios, it is only when each of the discrete tasks are processed that the initial instruction can be considered to completed. Returning to the image analysis example above, a single instruction may instruct a processor to carry out an image analysis on a plurality of images. In this example, the single instruction comprises multiple tasks, where each task is the analysis of a single image.

In many cases the tasks are complex in that they require a processor to interpret data and hence may require the use of processors which have used machine learning of a task. For example, a task may relate to image analysis of a picture of a crowd of people to recognise the face of a known subject. Where a plurality of different processors is used, each different processor may use a different approach (for example a different image analysis algorithm) and ultimately provide a different result for the same task. This is particularly the case where the processors are independent of each other and of a task allocator. This independence which is very desirable for reducing costs, minimising processing overhead and providing the ability to be rapidly scalable, not only gives rise to different results for the same task but also gives rise to further problems as explained below.

Typically in present systems, an instruction generation source will be configured to send instructions to a particular processor or pool of processors which has been previously determined as being most suitable for carrying out those instructions. This present approach has several drawbacks however. The first of these drawbacks is that the configuration of the instruction generation source may not be aware of all information regarding which of the one or more processors is most suitable for carrying out the instructed task. For example, and returning to the image recognition example, as image recognition techniques become more sophisticated, it is likely that newer processors will be made available which would be able to more efficiently and accurately process the instructed task. However, unless the instruction generation source has been made aware of this, the instructions will still be directed to the older processor, which will process the instruction in a sub-optimal manner.

Furthermore, if the processor that the instruction generation source is configured to send requests to is removed or otherwise disabled, the instruction generation source may not be informed of this, and the requests will continue to be sent to the disabled processor. This may lead to slow processing of the instruction, or indeed a complete failure to process the instruction until such time as the instruction generation source determines that the processor is no longer suitable for carrying out the instructed task.

In addition, instruction generation systems are typically configured to send their instructions to a recipient processor as a single instruction. Where there are a plurality of discrete tasks encapsulated within this one instruction, each of the tasks is typically in some prior art systems processed by the same processor in series. This clearly leads to inefficiencies in such a system, as it is required that each of the tasks be completed by a processor before the next task can be completed. In cases where there are a large number of discrete tasks within a single instruction, this can lead to long delays in the complete processing of the instruction. In addition, where the single instruction comprises a plurality of tasks which are of a different nature to one another (for example, an image recognition task and audio background noise reduction), when the instruction is provided to a processor as a single instruction, this can lead to the processor being made to perform a task which it is not configured to process in an efficient manner. This either means that the instruction is processed inefficiently or inaccurately, or requires that the instruction generation source disassociate the original instruction so that each task of the single instruction is sent to an appropriate processor. This is likely to mean that the instruction generation system is dependent upon user interaction in order to result in efficient processing.

The present invention has been devised against this backdrop and seeks to obviate at least some of the above-described problems with existing systems.

### Summary of the Invention

According to one aspect of the present invention there is provided an instruction processing system for processing instructions received from a remotely located instructing system, wherein each instruction comprises a plurality of tasks, a confidence level parameter associated with each task and a maximum number of iterations parameter, each task requiring a plurality of instances of the task to be processed in order to make a determination of confidence in the results of the processing the task, the instruction processing system including an iteration allocation system for processing the instruction, the iteration allocation system using a remotely located pool of distributed data processors operatively coupled to the iteration allocation system for processing an instance of at least one of the plurality of tasks, the iteration allocation system comprising: a multi-part instruction handler arranged to divide the received instruction into the plurality of tasks and to forward each task to an iteration creation system for processing each task separately; the iteration creation system for processing a received task to create a plurality of task iteration instruction records each representing an instance of the task, a selective access queuing system for temporarily holding all task iteration instruction records and selectively providing one of the task iteration instruction records to a requesting processor of the pool of distributed data processors; a results processing system for processing received results of task iteration instruction records processed by the pool of distributed data processors, wherein the results processing system comprises: a task results receipt processor for receiving the results of a processed task iteration instruction record and storing the results in a results database; an agreement verification processor arranged to: determine a current confidence level value associated with the degree of agreement between all of the results of received task iteration instruction records relating to the same task; compare the current confidence level value with the confidence level parameter of that task; change a task status parameter of the associated task to 'completed' and store the same in the results database if the current confidence level meets the value of the required confidence level parameter; change a task status parameter of the associated task to 'failed' and store the same in the results database if the current confidence level does not meet the value of the required confidence level parameter and the maximum number of iterations for the associated task have been carried out; and generate an new iteration instruction for the creation of a new task iteration record if the current confidence level does not meet the value of the required confidence level parameter and the maximum number of iterations for the associated task has not been carried out; a supplementary task iteration generation processor for generating new task iteration records, the supplementary task iteration generation processor being responsive to receiving the new iteration instruction from the agreement verification processor, to create the new task iteration record and pass the new task iteration record to the selective access queuing system; and a results request handler configured to receive requests from an instruction generation source for the results of a particular processed instruction, retrieve the results of a processed instructions and provide the results to the instruction generation source.

In this way the present invention solves at least one of the problems of the prior art outlined above. It is possible with the present invention to process an instruction utilising the advantageous distributed processing power structure mentioned above but without the problems of having to maintain an up-to-date registry of the capability of each processor prior to using that processor. Where one processor performs a process badly this can be taken into account by use of the confidence level in the results. Where the initial number of iterations are not enough to determine the outcome positively and there is enough time to further iterate the task, then the system can advantageously create new iterations records to better establish if the confidence level can be met with the result.

Preferably the selective access queuing system is arranged to provide one of the task iteration instruction records to a requesting processor of the pool of distributed data processors from a subset of the iteration instruction records; and the selective access queuing system comprises: a task iteration pool arranged to temporarily store iteration instruction records prior to their allocation to the requesting processor; a parameter information database configured to store historical performance data relating to how efficiently and accurately each data processor of the pool of distributed data processors has processed previous iteration instruction records; an iteration request module configured to receive a request from the requesting processor to process an unallocated task iteration instruction record from the task iteration pool; and a dynamic iteration access filter arranged to be responsive to the received request to determine and retrieve the subset of iteration instruction records that may be made available to the requesting processor and arrange the retrieved subset of iteration instruction records in an output queue. The dynamic iteration access filter may be arranged to determine the subset by consideration of processor information relating to: the processing capabilities of the requesting processor; previous processing of iteration instruction records by the requesting processor; and efficiency and accuracy data of the requesting processor in previously processing task iteration instruction records; where the processor information is obtained from the parameter information database.

This advantageously provides a solution to a further related problem associated with a distributed processing architecture, namely to avoid the problem of processors being assign tasks which they do not have the credentials to carry out effectively, or at least not as well as other processors. The above aspect provides the control of which task iteration records are available to each processor for selection and so can mitigate the processor from seeking to process tasks which is it not suitable for. Also the efficiency and accuracy data can be used to ensure that the most up-to-date performance information about each processor can be used to allocate the best processor to the task, or at least ensure the least optimal processor is not assigned the processing of an instance (iteration task record). These lead to great improvements in efficiency of instruction processing.

Preferably the task results receipt processor is arranged to analyse the result of the received processed task iterations instruction record to determine performance information relevant to the efficiency and accuracy of the processor from which the results were received and to forward the performance information to the parameter information database for storage.

In some embodiments, the iteration creation system is arranged to create a number of iteration instruction records for each task which is determined by the task parameters for the respective task, with at least one of these task parameters being the associated confidence level parameter for that task. Preferably the iteration creation system is arranged to create a minimum number of iteration instruction records of each task when the confidence level is 50% and a maximum number when the confidence level is approximately 100%.

The system may further comprise a priority allocation system for calculating a dynamic priority level of an associated task iteration instruction record in the task iteration pool, where an associated dynamic priority level is determined in consideration of data relating to previously processed task iteration records. This advantageously enable further control of which task iteration instruction is processed by the processor and enables automatic optimal allocation of task iteration records to requesting processors.

Preferably the task results receipt processor is arranged to determine priority information relevant to the priority level of unprocessed task iterations and to pass the priority information to the priority allocation system.

In some embodiments the supplementary task iteration generation processor is arranged to send a priority calculation request for a priority level of a newly created task iteration record to the priority allocation system and to assign a new priority level received from the priority allocation system to the newly created task iteration record.

Also the priority allocation system may be arranged to calculate the dynamic priority level of an associated task iteration instruction record by considering information included with the task instruction record including the identity of the instruction generation source and the currently assigned level of priority.

Preferably the system further comprises an filtered iteration queue coupled to the dynamic iteration access filter and wherein the dynamic iteration access filter is arranged to place the unallocated filtered task iteration records in the filtered iteration queue in order of the priority of each unallocated filtered task iteration record, with the task iteration record having the highest priority being arranged to be made available for selection first by the requesting distributer data processor.

In an embodiment the results processing system further comprises a processing pool filter parameter engine configured to access relevant information in received task iteration instruction records which may be used to determine which processors of the pool of distributed data processors are able to access particular unallocated task iteration records that are in the selective access queuing system, and to send this information to the selective access queuing system.

Preferably the processing pool filter parameter engine is arranged to identify processors of the pool of distributed data processors which have already processed an task iteration instruction record relating to a particular task and notify the selective queuing system of the identity of these processors to prevent them from selecting and processing another task iteration instruction record relating to that specific task. This is important to ensure the integrity of the confidence level an in the accuracy of the results.

In some embodiments each task iteration instruction record comprises: global parameters applicable to all tasks associated with that instruction; at least one set of task parameters relevant to a specific task contained in the instruction record; and at least one set of iteration parameters comprising data relevant to each task iteration, the at least one set of iteration parameters including an initial value for an associated dynamic priority level of the task iteration.

Preferably the results database is arranged to determine the current status of the instruction as: 'failed' if any of the tasks associated with the instruction have a 'failed' status; 'completed' if all of the tasks associated with the instruction have a 'completed' status; and 'pending' if any of the tasks associated with the instruction have a 'pending' status; and the results request handler is arranged to retrieve the status of the instruction from the results database and provide the same to the instruction generation source.

The present invention also extends to a method of processing instructions received from a remotely located instructing system, wherein each instruction comprises a plurality of tasks, a confidence level parameter associated with each task and a maximum number of iterations parameter, each task requiring a plurality of instances of the task to be processed in order to make a determination of confidence in the results of the processing the task, the method including using a remotely located pool of distributed data processors for processing an instance of at least one of the plurality of tasks, the method comprising: dividing the received instruction into the plurality of tasks and forwarding each task for separate processing; processing a received task to create a plurality of task iteration instruction records, each record representing an instance of the task; temporarily storing all unallocated task iteration instruction records and selectively providing one of the task iteration instruction records to a requesting processor of the pool of distributed data processors; receiving a result of a task iteration instruction record processed by one of the pool of distributed data processors; processing the received result by: storing the result of the processed task iteration instruction record in a results database; determining a current confidence level value associated with the degree of agreement between all of the results of received task iteration instruction records relating to the same task; comparing the current confidence level value with the confidence level parameter of that task; changing a task status parameter of the associated task to 'completed' and storing the task status parameter in the results database if the current confidence level meets the value of the required confidence level parameter; changing a task status parameter of the associated task to 'failed' and storing the task status parameter in the results database if the current confidence level does not meet the value of the required confidence level parameter and the maximum number of iterations for the associated task have been carried out; and generating an new iteration instruction for the creation of a new task iteration record if the current confidence level does not meet the value of the required confidence level parameter and the maximum number of iterations for the associated task has not been carried out; generating a new task iteration record in response to creation of the new iteration instruction, and temporarily storing the new task iteration record with the existing unallocated task iterations; receiving a request from an instruction generation source for the results of a particular processed instruction, retrieving the results of a processed instructions from the results database; and providing the results to the instruction generation source.

The above described features of the embodiments are combinable in different ways and can be added to the following specific description of the embodiments of the present invention if not specifically described therein.

### Brief Description of the Drawings

In order that the invention may be more readily understood, reference will now be made, by way of example, to the accompanying drawings in which:
Figure 1 is a schematic block diagram, illustrating an iteration allocation system in accordance with an embodiment of the present invention in combination with a plurality of multi-part instruction generator systems and processors that form part of a processing resource pool which carry out sub-divided task iterations created by the iteration allocation system;
Figure 2 is a schematic block diagram, showing the iteration allocation system of Figure 1 for efficiently providing a processing resource pool with suitable sub-divided task iterations according to an embodiment of the present invention;
Figure 3A is a schematic block diagram, showing an example of a pre-division instruction record data structure provided by a multi-part instruction generator system which is used for creating and allocating task iterations by the system shown in Figure 2;
Figure 3B is a schematic block diagram, showing an example of an instruction record data structure after it has been divided into a task iteration by the system shown in Figure 2;
Figure 4 is a flow diagram, showing a method of dividing a multi-part instruction into task iterations and efficiently allocating the task iterations to suitable processors in a processing resource pool by the iteration allocation system of Figure 2;
Figure 5 is a schematic block diagram, showing an iteration creation system of the iteration allocation system of Figure 2;
Figure 6 is a flow diagram, showing a method of generating task iterations by the iteration creation system of figure 5;
Figure 7 is a schematic block diagram, showing a selective access queuing system of iteration allocation system of Figure 2;
Figure 8 is a flow diagram, showing a method operation of the selective access queuing system of Figure 6;
Figure 9 is a schematic block diagram, showing a priority allocation system of the iteration allocation system of Figure 2;
Figure 10 is a flow diagram, showing a method of operation of the priority allocation system of Figure 9;
Figure 11 is a schematic block diagram, showing a results processing system of the iteration allocation system of Figure 2;
Figure 12A is a flow diagram, showing a method of determining whether a sufficient number of iterations of a task have been completed, by the results processing system of Figure 11;
Figure 12B is a flow diagram, showing a method of assessing whether results of a plurality of task iteration are in accordance with a predetermined agreement parameter, by the results processing system of Figure 11; and
Figure 13 is a flow diagram, showing a method by which results of a multi-part instruction may be provided to a multi-part instruction generator system by the iteration allocation system of Figure 2.

### Detailed Description of Example Embodiments

Specific embodiments are now described with reference to the appended figures.

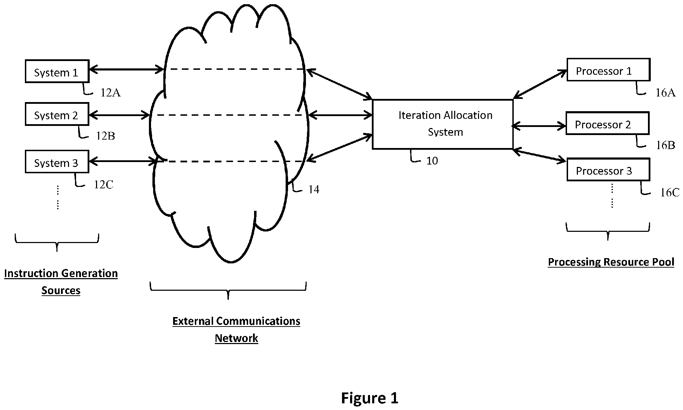

Turning firstly to Figure 1, there is shown a use scenario for an iteration allocation system (IAS) 10 according to an embodiment of the present invention, which is configured to receive instructions from one or more instruction generation sources 12A, 12B, 12C located remotely from the IAS 10. The IAS 10 forms part of an instruction processing system which is comprised of the combination of the IAS 10 and a resource processing pool made up of a plurality of processors 16A, 16B, 16C. Whilst three instruction generation sources 12A, 12B, 12C are shown in Figure 1, it is to be understood that this is for illustrative purposes only and there may be any number of such sources. The instructions which are generated by the one or more instruction generation sources typically comprise a plurality of smaller discrete tasks which must all be processed and completed in order for the initial instruction received from the instruction generation source 12A, 12B, 12C to be designated as having been processed overall. The discrete tasks which form the instructions will typically each comprise an action to be performed by a processor and will contain sufficient information such that the processor is able to complete the task based on the information. The tasks will also typically be finite, consisting of a distinct start and end point, rather than being persistent in nature.

In some embodiments, the discrete tasks may be automatically generated by a processor local to the instruction generation source 12A, 12B, 12C (not shown). In such embodiments the tasks may be of a routine automated nature, and the instruction generation source is configured to send instructions for tasks to be processed at regular intervals. Alternatively, the discrete tasks of an instruction may be specified by a user of the instruction generation source 12A, 12B, 12C before they are sent to the IAS 10.

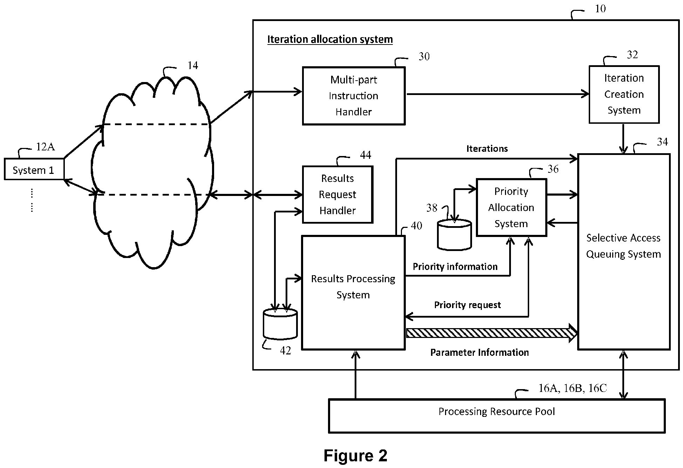

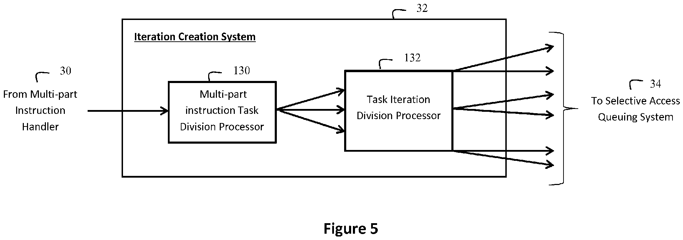

Once the IAS 10 receives instructions from the instruction generation sources 12A, 12B, 12C, the IAS 10 separates the discrete tasks within the instruction such that each of the discrete tasks may be processed by separate processors 16A, 16B, 16C which form a processing resource pool. Whilst three instruction generation sources 16A, 16B, 16C are shown in Figure 1, it is to be understood that this is for illustrative purposes only and there may be any number of such processors. This separation carried out by the IAS 10 may comprise creating new tasks which each contain sufficient information that the task can be completed by a processor 16A, 16B, 16C. It is to be appreciated that whilst separate tasks may each be assigned to separate processors 16A, 16B, 16C, it is also possible for each of the tasks to be assigned to a single processor. The way in which this separation is achieved is discussed further below with reference to Figures 2 and 5.

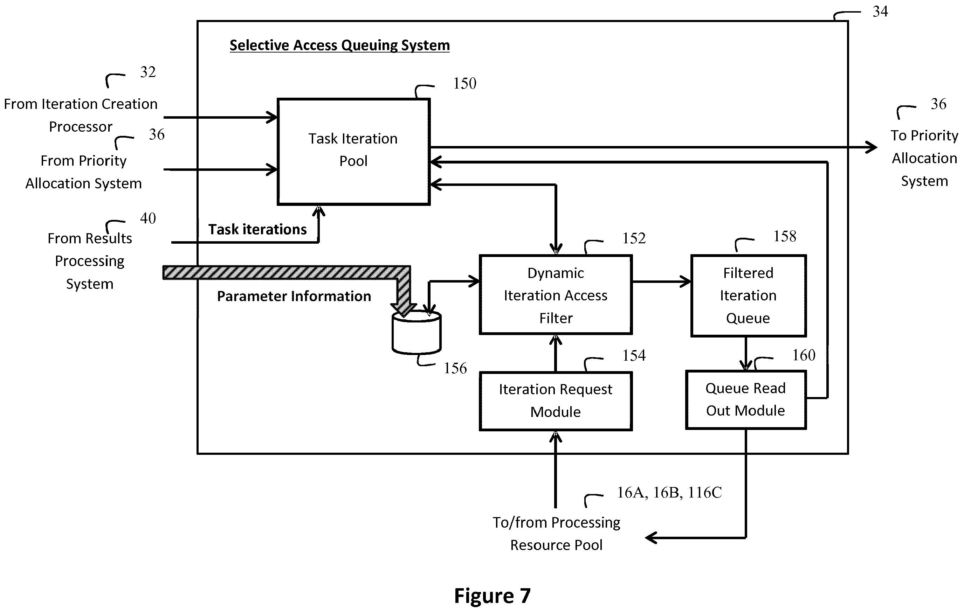

Once the IAS 10 has divided the instructions into discrete tasks, each of these tasks is then passed to a processor 16A, 16B, 16C within the processing resource pool where each task is processed. In some embodiments, the IAS 10 may be configured to determine which processor 16A, 16B, 16C is able to process the task most efficiently and/or most accurately, and assign the task to this processor 16A, 16B, 16C. This determination may be achieved through consideration of current and historic information regarding the abilities of a particular processor 16A, 16B, 16C. Returning to the image recognition example, this determination may comprise assessing which processors in the processing pool are configured to perform image recognition tasks and pass image recognition tasks to these processors. The determination may further comprise assessing the accuracy and efficiency of results of previous tasks completed by each processor 16A, 16B, 16C and only passing a task to a processor 16A, 16B, 16C where it is known that that processor 16A, 16B, 16C is able to produce an accurate and/or efficient result for that task. The way in which the IAS 10 achieves this determination is discussed further below with reference to Figures 2 and 7.

Each instruction may require a task to be carried out multiple times (each time being referred to as a 'task iteration') on different processors 16 A, 16B, 16C and for the result of that task to be determined by a consideration of the collective results of the iterations. Such an approach is particularly useful in a machine learning environment where there are distributed processing resources typically having different machine learning algorithms. This is described in greater detail below.

Restricting the available task iterations based on the abilities of a particular processor 16A, 16B, 16C may be advantageous in ensuring an efficient and accurate processing of a particular task iteration. By requiring that the processor 16A, 16B, 16C carrying out the task is able to do so in an efficient and accurate manner both helps to increase the fidelity of the result, as well as helping to limit the scope for wasted processing resource. In particular, basing this restriction in part on results which have been previously (and recently) processed by a processor 16A, 16B, 16C means that the IAS 10 is able to take into account information regarding the ability of the processor 16A, 16B, 16C which may not be available to the instruction generation source 12A. Furthermore, such an implementation also helps to ensure that a particular processor 16A, 16B, 16C does not process more than one task iteration for a particular task, which is generally undesirable as can be seen from the image processing example given above.

In some embodiments, each instruction issued by the instruction generation source 12A, 12B, 12C may also typically comprise an associated confidence level parameter which needs to be met in order for the instruction to be designated as processed. In such scenarios, the IAS 10 may additionally be configured to receive the results of the processed task from the processors 16A, 16B, 16C in order to perform an assessment of whether the confidence level parameter has been met. In some embodiments of the present invention, in order for the confidence level parameter to be met it will typically be necessary for the discrete tasks of the instruction to each be performed a plurality of times, with each performance being carried out by a different processor 16A, 16B 16C. Such a performance will be referred to as a task iteration as has been mentioned previously. The IAS 10 is configured to create task iterations based on the confidence level parameter of the instruction and also to receive the processed results of each task iteration from the processors 16A, 16B, 16C. The way in which this is achieved is discussed further below with reference to Figures 2 and 5. In some embodiments, each discrete task of the instruction may have its own associated confidence level parameter. In these embodiments, the IAS 10 may be further configured to create task iterations based on the associated confidence level of the individual task.

The provision of a confidence level parameter may be of particular use where there are multiple methods for a processor 16A, 16B, 16C to process a particular task, where it is possible that the use of different methods will lead to a different result. Returning to the image analysis example, and specifically an image analysis task which comprises identifying a party within an image, there are a plurality of available methods to analyse images and it is possible that one or more of the methods may lead to a different party being identified than other methods used. In this case, it is advantageous for there to be a requested results verification which checks the agreement of the result of the analysis between different methods. This can be encapsulated within the provision of a confidence level parameter which requires that each task is performed a plurality of times, and that at least a subset of the results of each performance are in agreement with each other. Another example in the image processing field is where a specified task in an instruction is to determine the predominant colour of an item in an image as being either yellow or green for classification of the item. In this case the item colour in the image is chartreuse (in between yellow and green) and so different processors may give different results because of they way that their colour definitions have been set up. By running several iterations of the task, it is possible to build up a consensus as to the actual colour of the item as would be interpreted by most processors. This consensus approach also avoids erroneous results which could be based on a single processor having a particular definition which is not in accordance with a common definition as determined by most machine learning processors.

Once the results of a task iteration are received by the IAS 10, the results may then be compared by the IAS 10 to other task iterations of the same task in order to determine whether there is agreement between each task iteration result. If there is sufficient agreement between the task iteration results to satisfy the confidence level parameter, then the specific task may be designated as processed, and the result of the task stored by the IAS 10 in order to be accessed by the instruction generation source 12A, 12B, 12C which requested the task. In some embodiments, the IAS may be configured to allow the results of the task to be accessed by a party other than the initial instruction generation source 12A, 12B, 12C.

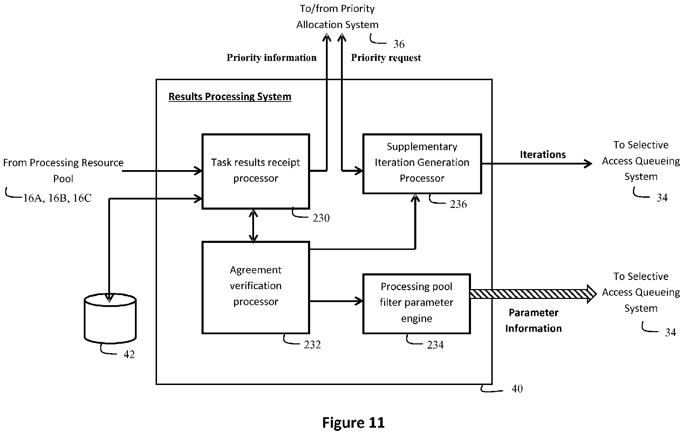

If it is determined by the IAS 10 that the results do not agree sufficiently to satisfy the confidence level parameter, then the IAS 10 may be configured to create additional task iterations for the particular task. The additional amount of task iterations created may be determined by consideration of the confidence level parameter of the task and the results of present task iterations. The task iterations may be configured such that the task iteration can only be assigned to a processor 16A, 16B 16C which has not yet processed a task iteration for that particular task. The way in which the IAS 10 assesses whether the confidence level parameter for a task has been met and the creation of additional task iterations is discussed in further detail below with reference to Figures 2 and 11.

The instruction generation sources 12A, 12B, 12C are typically configured to transmit their instructions to the IAS 10 via an external communications network 14, where the instruction generation sources 12A, 12B, 12C are located remotely from the IAS 10. Such an external communications network 14 may comprise any network capable of supporting suitable wireless or wired communication methods. In some embodiments, the instruction generation sources 12A, 12B, 12C may be located proximately to the IAS 10 and in these examples, the instruction generation sources 12A, 12B, 12C may be directly communicably coupled to the IAS 10 without the need for an external communications network 14. Similarly, the processors 16A, 16B, 16C that form the processing resource pool may also may also be configured to be located either remotely from, or proximately to, the IAS 10. Where the processors 16A, 16B, 16C are located proximately to the IAS 10, the processors 16A, 16B, 16C may be communicably coupled to the IAS 10. Where the processors 16A, 16B, 16C are located remotely to the IAS 10, the processors 16A, 16B, 16C may be configured to receive tasks to be processed and to transmit the results of the tasks from/to the IAS 10 via an external communications network (not shown)but which could be similar to the communications network 14 described above.

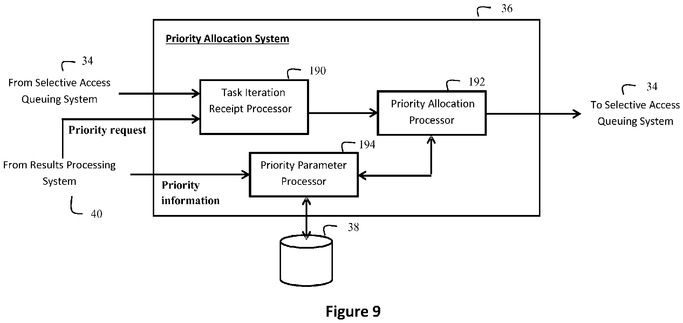

In some embodiments of the present invention, the IAS 10 may also be arranged to prioritise the assignment of tasks to be completed by the processors 16A, 16B, 16C. This prioritisation may take into account the instruction generation source 12A, 12B, 12C which initially sent the instruction that contains the task to be processed. It may also take into account other instructions which are waiting to be processed that have originated from the same instruction generation source 12A, 12B, 12C, as well as instructions that have originated from other instruction generation sources 12A, 12B, 12C. The prioritisation of a particular task or task iteration within an instruction by the IAS 10 may also take into account the amount of resource which has been expended on other tasks or task iterations which have also originated from the same initial instruction. The way in which the IAS achieves this prioritisation is discussed further below with reference to Figures 2 and 9.

Referring now to Figure 2, the IAS 10 according to a first embodiment of the present invention is shown in greater detail. The IAS 10 receives multi-part instructions received from instruction generation sources 12A, 12B, 12C and divides these multi-part instructions into tasks and task iterations before assigning these task iterations to processors 16A, 16B, 16C in a processing resource pool, where this assignment prioritises certain tasks in accordance with present and historic information. In addition, the IAS 10 also determines whether the results of the processed task iterations are in accordance with a predetermined confidence level parameter for the overall task and where they are not, the IAS 10 is configured to create additional task iterations in order that the confidence level parameter of that particular may be satisfied. In Figure 2, for the purposes of clarity, there is only one instruction generation source 12A shown, however it is to be understood that multiple remote interaction units 12A, 12B, 12C may transmit instructions to the IAS 10 and these instructions may be handled by the IAS 10 simultaneously in parallel according to an embodiment of the present invention. The instruction generation sources 12A, 12B, 12C are typically configured to transmit requests to the central control system 10 via the external communications network 14.

The IAS 10 first comprises a multi-part instruction handler 30 which receives instructions from the instruction generation source 12A via the external communications network 14. The multi-part instruction handler 30 is configured to receive and process the instructions such that they are in a suitable format to be further processed by the IAS 10 and/or the processors 16A, 16B, 16C in the processing resource pool. The instruction processing may comprise identifying the information source 12A that the instruction has originated from and determining whether the information source 12A has permission to send instructions to be processed by the IAS 10 and the processors 16A, 16B, 16C in the associated processing resource pool. The instruction processing may further comprise whether the provided instructions contain sufficient information to allow the instruction to be processed.

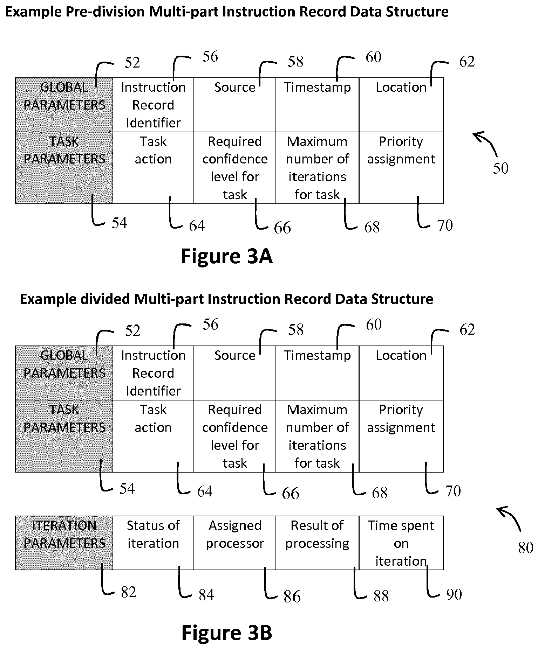

The instructions themselves typically comprise information which enables the IAS 10 to process the instruction efficiently. In particular, as mentioned previously an instruction can comprise a confidence level parameter which identifies a required level of confidence for the results of the instruction. The confidence level parameter may additionally be configured to be different for different parts of the instruction. The confidence level parameter may be configured to be satisfied when the results of the instructed task (or a part of a task) are agreed upon by a plurality of processors 16A, 16B, 16C. This confidence level parameter therefore may be used in order to determine the number of task iterations which are created for a particular task by the IAS 10. An example data structure for the instructions is provided below, with reference to Figures 3A and 3B.

As the instructions are received via the external communications network 14, it is conceivable that the instructions may undergo some form of data corruption as they are being transmitted, or that the instruction generation source 12A did not provide all of the information necessary to process the request. In some embodiments of the present invention, the multi-part instruction handler 30 is additionally configured to verify the veracity and integrity of the instructions and only process the instructions if the data is complete and uncorrupted., Where the veracity and integrity of the instructions is not sufficient to allow the instruction to be processed, the multi-part instruction handler 30 is configured to notify the instruction generation source 12A, which supplied the initial instruction, that the instruction is unable to be processed.

Once an instruction has been processed by the multi-part instruction handler 30, the instruction is passed to an iteration creation system 32 which is coupled to the multi-part instruction handler. The iteration creation system 32 is configured to further process the initial instruction such that the instruction is divided into tasks and task iterations. This may be achieved by the analysis of the instruction, in order to determine the separate tasks that are included in the instruction and the required confidence level for each of these tasks. The iteration creation system 32 then creates separate task iterations which each contain sufficient information that they are separately able to be processed by processors 16A, 16B, 16C in the processing resource pool. How this is achieved is discussed further below with reference to Figure 5.

The iteration creation system 32 is additionally coupled to a selective access queuing system 34 and upon the creation of task iterations, the task iterations are then passed to this queuing system, where each task awaits processing by one of the processors 16A, 16B, 16C of the processing resource pool, to which the selective access queuing system 34 is coupled. The selective access queuing system 34 is configured to allow a processor 16A, 16B, 16C in the processing resource pool to request to process an available task iteration. Such a request may be configured to be in the form of a pull request. The selective access queuing system 34 of the present embodiment is also configured to only allow certain processors 16A, 16B, 16C to request to process certain available task iterations and may present a subset of the available tasks to the processors 16A, 16B, 16C. The determination of which of the tasks each processor is allowed to process is typically dependent upon historic and current information relating to that processor. This information may include the nature of the task to be processed, the processing results history of each processor 16A, 16B, 16C, whether the processor 16A, 16B, 16C has previously (or is currently) processing a task iteration originating from the same task, the priority of any particular task, and preferences of the instruction generation source 12A. It is to be appreciated that this is an illustrative list and is not intended to be exhaustive. Information which enables the selective access queuing system 34 to determine which processors 16A, 16B, 16C are able to process each task iteration may be provided as part of the information included in the initial instruction. Further information relating to the priority of a particular task iteration may be provided by a priority allocation system 36 which is coupled to the selective access queuing system 34, provided within an embodiment of the present invention. It may also receive information relating to the results of previous task iterations from a results processing system 40 provided in the IAS 10, which may be used for determining which processors 16A, 16B, 16C are able to process each task iteration. The results processing system 40 is discussed in further detail below. The way in which the selective access queuing system 34 determines which task iterations may be presented to each processor 16A, 16B, 16C is discussed in greater detail with reference to Figure 7.

As mentioned above, the selective access queuing system 34 is also coupled to a priority allocation system 36. The priority allocation system 36 is configured to periodically determine a priority level for each task iteration which is currently awaiting processing in the selective access queuing system 34. The priority level for each task iteration may be determined by the priority allocation system 36 in dependence upon a plurality of sources of information, such as the amount of time spent on processing other task iterations of a particular task or multi-part instructions, the instruction generation source 12A which transmitted the initial instruction as well as any other relevant information. The priority level which is given to each task iteration is in some embodiments absolute. In other embodiments, the priority level given to each task iteration is relative to other tasks which are awaiting processing. For example, in some embodiments, there may be distinct priority levels which may be assigned to each task iteration, where a plurality of task iterations may be given the same priority level and the assigned priority level is independent of the priority levels of other task iterations. In this type of embodiment, the priority level would be considered absolute. In other embodiments, the priority level given to a task iteration may comprise a designation that the task iteration explicitly should be processed before another task iteration awaiting processing. This would be an example of a relative priority level. The priority allocation system 36 may be configured to receive information used to determine the priority level of a particular task from the selective access queuing system 34 and the results processing system 40 (discussed below). Information which is received by the priority allocation system 36 may also be configured to be stored in a priority parameter database 38 to which it is communicably coupled. This information may then be subsequently retrieved upon a further priority allocation determination being enacted. The method by which the priority allocation system 36 operates in a present embodiment of the invention is discussed below with reference to Figure 9.

As previously mentioned, the IAS 10 is also provided with a results processing system 40. The results processing system 40 is communicably coupled to the processors 16A, 16B, 16C of the processing resource pool. The results processing system 40 is configured to receive the results of the task iterations that have been processed by the processors 16A, 16B, 16C and to analyse the results to determine whether the processed task iterations are sufficient for a task and/or instruction to be designated as fully processed. This assignment of this designation may be dependent upon the number of task iterations that have been completed for a particular task, and whether there is sufficient agreement that the confidence level parameter is satisfied. Where it is determined by the results processing system 40 that the confidence level parameter is satisfied for a particular task, the results of the task are stored in a results database 42 which is coupled to the results processing system 40 with a status indicating that the task has been successfully processed.

Where the results processing system 40 determines that the confidence level parameter has not been satisfied for a particular task, the results of the task are stored in the results database 42 with a status indicating that the task has not yet been successfully processed. Upon such a determination, the results processing system 40 may be further configured to create additional task iterations which are to be processed by processors 16A, 16B, 16C which have not yet performed an iteration of that particular task. Upon creation, these tasks are passed to the selective access queuing system 34 where they await processing in accordance with embodiments described above. In order to create the additional task iterations, the results processing system 40 may also request priority information from the priority allocation system 36 such that the new task iteration may be entered into the selective access queuing system 34 with an initial priority level.

The results processing system 40 may be additionally be configured to update both the selective access queuing system 34 and the priority allocation system 36 with information which can be used to assist in the functioning of the respective feature. In the case of the selective access queuing system 34, the results processing system 40 may be configured to provide parameter information relating to the accuracy of results provided by a particular processor 16A, 16B, 16C, as well as indicating when a processor 16A, 16B, 16C has completed an iteration of a particular task. This parameter information may be used in deciding upon which of the processors 16A, 16B, 16C are able to request to process a particular task iteration. In the case of the priority allocation system 36, the results processing system 40 may be configured to provide information relating to the amount of time spent processing a particular task or instruction. This is one factor that may be used to help determine the priority of tasks in the selective access queuing system 34, both for the task iterations relating to the same task or instruction, and also task iterations relating to any instruction or task provided by a particular instruction generation source 12A. The functioning of the various aspects of the results processing system will be described in greater detail below.

In the IAS 10, there is also provided a results request handler 44 which is configured to receive requests for results of a particular task or instruction from an instruction generation source 12A, via the external communications network 14. In some embodiments, the results of a task or instruction may only be retrieved by the instruction generation source 12A which transmitted the original instruction. In alternative embodiments, the results may be requested by any instruction generation source 12A, 12B, 12C which has suitable permissions to access those results, where such permission may be predetermined by a user of the IAS 10. The results request handler 44 is configured to, upon request, retrieve results from the results database 42 relating to the task or instruction for which the request was made. In some embodiments, the results request handler 44 is configured to only retrieve results where the task or instruction has been designated as processed, in accordance with embodiments described above. In such embodiments, the results request handler 44can, upon determination that the requested task or instruction has not yet been processed, provide a notification to the instruction generation system 12A, that the requested result is not yet processed. In other embodiments, where a requested task has not yet been completed but some iterations of that task have been processed, the results request handler 44 may be configured to provide the instruction generation source 12A with the results of the individual task iterations, and to notify the instruction generation source 12A that the task is partially processed.

Turning to Figure 3A, there is shown an example data structure 50 of an instruction which can be sent by the instruction generation source 12A to be received by the multi-part instruction handler 30. In this embodiment this data structure 50 may be considered to be the instruction 50 itself. This data structure is provided before the instruction undergoes division into tasks or task iterations. The data structure 50 comprises a plurality of information parameters, which may be used both to uniquely identify the instruction, to determine the tasks that are to be processed as part of the instruction, and to determine the confidence level required by the instruction generation source 12A to subsequently ascertain how many iterations of each task are necessary. These information parameters may all be configured to be invariable or static throughout the process of the instruction. In this instance, a new instruction would need to be submitted if any of the information parameters changed. Alternatively, the structure may be configured such that the information parameters may be varied upon further instruction from the instruction generation source 12A. This allows the possibility of an instruction generation source 12A being able to send an alteration to an instruction in the form of a shorter update instruction which has been previously sent without requiring that an entirely new instruction be sent.

The information parameters in the instruction 50 are, in an embodiment of the present invention, comprised of global parameters 52 and task parameters 54. Global parameters 52 are parameters which may apply to all tasks that are specified within the instruction. Task parameters 54 are information parameters which specifically apply to certain tasks that the instruction indicated should be processed by the processors 16A, 16B, 16C and will typically vary from task to task.

The global parameters 52 of this embodiment comprise a unique instruction record identifier 56, which may be assigned to the request on receipt by the multi-part instruction handler 30, or may be assigned when the instruction generation source 12A initiates the instruction. The global parameters 52 further comprise the source 58 of the request identifying the instruction generation source 12A which the instruction originated from. The global parameters 52 further comprise a timestamp 60 indicating when the instruction was initiated by the instruction generation source 12A. Again, this may be assigned to the request on receipt by the multi-part instruction handler 30, or may be assigned when the instruction generation source 12A initiates the instruction. The global parameters 52 yet further comprise the location 62 that the instruction was sent from. This may be useful in determining where a plurality of instructions is being received from similar locations in order to aid in determining priority of a particular task iteration.

The task parameters 54 in this embodiment comprise a task action 64 which indicates what actions need to be performed by a processor 16A, 16B, 16C in order for the task to be processed. The task parameters 54 further comprise a required confidence level 66 for the task. This is typically used to determine the number of iterations which are initially created for the task by the iteration creation system 32. For example, the required confidence level parameter may specify that at least four iterations of the task must be performed, and that for the total number of task iterations performed, at least 75% of these must yield the same result. In some embodiments the iteration creation system 32 is arranged to create a minimum number of iteration instruction records 80 of each task when the confidence level is 50% and a maximum number when the confidence level is approximately 100%. This is because the resolution of possible results (confidence percentages) is increased with greater number of iterations, whereas 50% is one of the easiest to achieve with a plurality of instances.

In some embodiments of the present invention, the required confidence level task parameter 66 may alternatively be deemed a global parameter, where all tasks within the instruction are deemed as requiring the same confidence level by the instruction generation source 12A. The task parameters 54 further comprise a specified maximum number of iterations for a task 68. This is provided in the case where the instruction generation source 12A wishes for a task to be completed to a particular confidence level, but if that confidence level cannot be reached within a certain number of iterations, wishes for the task to be terminated. This is useful in preventing a task from consuming too much processing resource and preventing a single task from persisting indefinitely. The task parameters 54 in this embodiment yet further comprise an initial priority assignment 70, which indicates an initial priority level to be assigned to the task when it is placed in the selective access queuing system 34. This may be useful in cases where a particular instruction generation source 12A is known by the IAS 10 and should always be deemed as having a particular initial priority level.

It is to be noted that the task parameters 54 shown in Figure 3A relate to one particular task in an instruction. Where an instruction comprises multiple tasks, there may be additional task parameters 54 of the same nature included in the instruction record data structure 50, with each set of task parameters 54 relating to a particular task.

Figure 3B shows an example data structure 80 of an instruction which has undergone processing by the iteration creation system 32 such that the data structure 80 is now in relation to an iteration of a particular task, in accordance with embodiments described previously. The example data structure 80 of a task iteration in this embodiment firstly comprises the global parameters 52 and task parameters 54 included in the instruction record data structure 50 of Figure 3A. However, since the instruction record data structure 80 of Figure 3B relates to a particular task iteration, there will only be one set of task parameters 54, whereas the instruction record data structure 50 of Figure 3A may comprise a plurality of sets of task parameters 54. The inclusion of the global 52 and task 54 parameters in the instruction record data structure 80 of a task iteration is useful in identifying the task and instruction that that particular iteration has been derived from, as well as identifying the source of the initial instruction. Furthermore, it may also be useful in determining, upon processing of the task iteration, whether the task which it derived from can be designated as processed in accordance with the confidence level parameter of the task.

In addition to the global 52 and task 54 parameters described previously, the task iteration instruction record data structure 80 of this embodiment further comprises iteration parameters 82 which are specific to the particular task iteration. When the task iteration instruction record data structure 80 is generated by the iteration creation system 32, an individual structure may be created for each iteration of the task which is required (note Figure 3B only shows one of these individual structures but in practice there will be hundreds of thousands). The iteration parameters 82 may comprise an iteration status 84 which designates whether the iteration is awaiting processing, is undergoing processing or has been processed. The iteration parameters 82 may further comprise an identifier 86 for a processor 16A, 16B, 16C to which the task iteration has been assigned. Upon creation of the task iteration instruction record data structure 80, it is likely that this parameter 86 will be null, and will be updated once a processor has been assigned at a later stage. The iteration parameters 82 further comprise a processing result 88 which indicates the result of the task iteration that the assigned processor 16C, 16B, 16C has been tasked with completing. The iteration parameters 82 yet further comprise a parameter 90 indicating the time spent on processing the iteration. This information may be used in order to help determine priorities of other task iterations, which will be described in greater detail below.

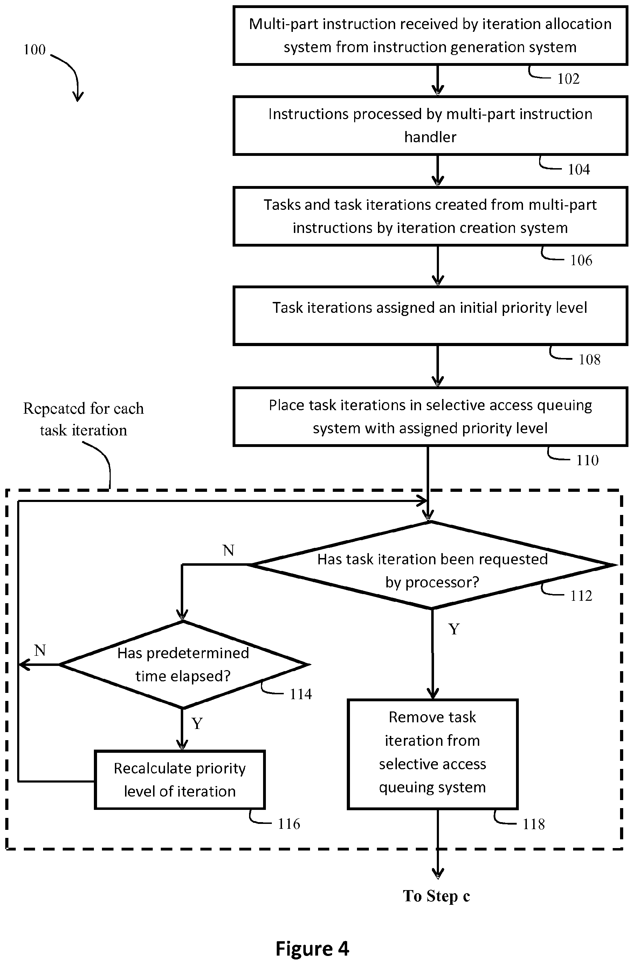

Figure 4 shows in detail a method of operation 100 of an embodiment of the IAS 10. In particular there is described a method of operation detailing how a multi-part instruction is received by the IAS 10, is split into task iterations, and then provided to a processor 16A, 16B, 16C. The method of operation begins by receiving, at Step 102, a multi-part instruction from an external instruction generation system 12A. The multi-part instruction is received by the multi-part instruction handler 30. Following the receipt of the multi-part instruction, the multi-part instruction itself is processed, at Step 104, by the multi-part instruction handler 30. This processing may comprise any one or more of ensuring that the instruction is in a suitable format for further processing by the IAS 10 and/or the processors 16A, 16B, 16C, assigning a unique identifier to the instruction, assigning a timestamp to the instruction and verifying the veracity and integrity of the instruction to ensure that the instruction can be processed by the IAS 10 and/or the processors 16A, 16B, 16C.

Following this, the instruction is passed to the iteration creation system 32, where individual tasks and task iterations are created, at Step 106, from the initial instruction. This creation may comprise identifying the individual tasks required by the instruction, dividing the instruction appropriately into the constituent tasks and creating an instruction record to be processed for each, identifying a confidence level parameter for each task and creating separate iterations for each task in accordance with the confidence level parameter. Each task iteration may similarly comprise a separate instruction record which is to be processed for each iteration. This division of the initial instruction will be discussed in greater detail below with reference to Figure 5.

Once each task iteration is created, each of the task iteration is then assigned, at Step 108, an initial priority level, indicating a preference regarding which task iteration will be processed ahead of other task iterations. The priority levels may be absolute or relative in accordance with embodiments described above. In some embodiments, the priority level may be assigned as a result of an priority assignment information parameter 70 provided with the initial instruction. In other embodiments, each new task iteration may be assigned an initial default priority level which is the same irrespective of the initial source of the instruction or the nature of the task iteration. In yet further embodiments, the initial priority level assignment may be governed by the source of the request 58. This may be particularly prevalent where a particular instruction generation source 12A regularly provides instructions to the IAS 10, and it is desirable to always assign this particular information generation source's 12A requests with a particular priority level (i.e. if the source has a predetermined relationship with a user of the IAS 10).

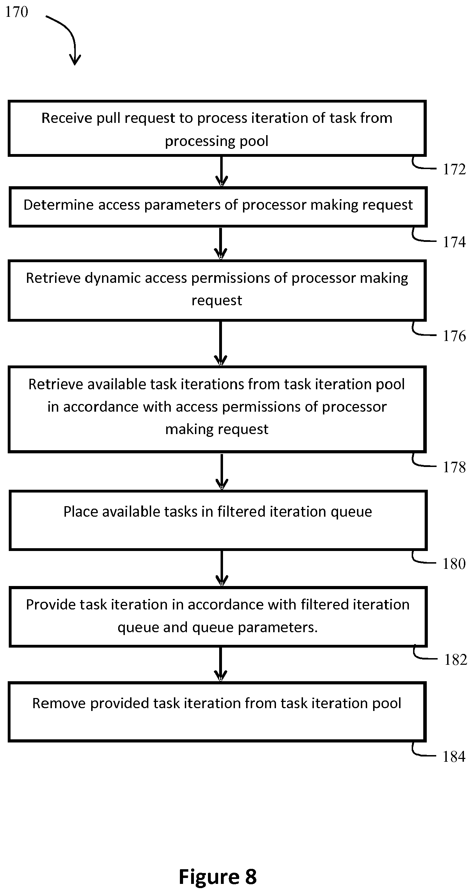

Once each task iteration has been assigned a priority, the task iterations arising from the initial instruction are placed, in Step 110, in the selective access queuing system 34 with the assigned priority level. Once the task iterations are in the selective access queuing system 34, they are able to be requested by a processor 16A, 16B, 16C from the processing resource pool such that the task iteration may be processed. This process will be discussed in greater detail below with reference to Figure 8.

Once the task iterations are placed in the selective access queuing system 34, they are configured to remain there until they are pulled by a processor 16A, 16B, 16C. Whilst they remain in the selective access queuing system 34, they are also subject to periodic updates of their assigned priority levels. In order to achieve this, and returning to Figure 4, once a task iteration has been placed in the selective access queuing system 34, the selective access queuing system 34 determines, at Step 112, whether the task iteration has been requested by a processor 16A, 16B, 16C. If it is determined that it has not, then the method of operation 100 proceeds to determine, at Step 114, whether a predetermined time period has elapsed. This predetermined time period determines the period between successive recalculations of the priority allocation of the task iterations. In some embodiments, the predetermined time period may be set by an operator of the IAS 10. In further embodiments, the predetermined time period may also be included as an information parameter of the initial instruction, which is configured to notify the IAS 10 of the priority allocation recalculation period preferences of the instruction generation source 12A for that instruction (or task within that instruction).

If it is determined, at Step 114, that the predetermined time period has not elapsed, the method of operation 100 returns to Step 112, where it is determined whether the task iteration has been requested by the processor. If however it is determined that the predetermined time period for a particular task iteration has elapsed, the task iteration is passed to the priority allocation system 36, where the priority for that task iteration is recalculated. In some embodiments, the predetermined time period may be configured to apply to each task iteration individually, such that individual task iterations may individually have their priority allocations recalculated once the predetermined time period has elapsed. In other embodiments, the predetermined time period may be configured to apply to all task iterations in the selective access queuing system 34, and when the predetermined time period elapses, all of the task iterations presently in the selective access queuing system 34 are sent to the priority allocation system in a batch. Once the priority level of the one or more task iterations has been recalculated, the one or more task iterations are passed back to the selective access queuing system 34 and the method of operation 100 returns to Step 112, where it is determined whether the task iteration has been requested by the processor 16A, 16B, 16C.

If, at Step 112, it is determined that a particular task iteration has been requested by a processor 16A, 16B, 16C, 16D, the task iteration is then passed to the requesting processor 16A, 16B, 16C and the task iteration is removed from the selective access queuing system 34. In some embodiments, the task iteration which has been requested by the processor will not be removed, but instead the status 84 of the task iteration will be updated to "being processed," and relevant information from the task iteration may be copied and passed to the requesting processor 16A, 16B, 16C. This status 84 may prevent the task iteration from being requested by another processor, as well as prevent the task iteration from being subject to priority reassessment. In such an embodiment, if the task iteration has not been processed by the requesting processor 16A, 16B, 16C within a certain time period and received by the results processing system 40, the status 84 of the task iteration in the selective access queuing system 34 may be configured to return to awaiting processing, and any results received subsequently by the initial requesting processor will be disregarded.

It is to be noted that whilst the method of operation 100 has been described in relation to the treatment of a particular task iteration originating from an instruction, it is to be appreciated that Steps 112, 114, 116 and 118 are configured so as to be carried out for each task iteration.

Returning to elements of an embodiment of the IAS 10 of Figures 1 and 2, Figure 5 illustrates the iteration creation system 32 in more detail. The iteration creation system 32 firstly comprises a multi-part instruction task division processor 130, which is configured to receive a multi-part instruction from the multi-part instruction handler 30. The multi-part instruction task division processor 130 is further configured to analyse the information parameters 50 of the instruction to determine the tasks which are specified within the instruction. The multi-part instruction task division processor 130 then creates separate instruction records for each identified task. The tasks will contain sufficient information at least such that the instruction and source of the instruction that the task originated from can be identified, and so that the processors 16A, 16B, 16C are able to process the task.

The multi-part instruction task division processor 130 is coupled to a task iteration division processor 132 which is configured to receive the task instruction records created by the multi-part instruction task division processor 130 from the initial instruction record. The task iteration division processor 132 is further configured to analyse the information parameters 50 of the created tasks to determine the number of iterations which are required, in accordance with the provided confidence level parameter. The task iteration division processor 132 then creates separate instruction records for each identified task iteration. The created task iteration instruction record may be in a form similar to that shown in Figure 3B, and will contain sufficient information at least such that the instruction and source of the instruction that the task iteration originated from can be identified, and so that the processors 16A, 16B, 16C are able to process the task iteration.

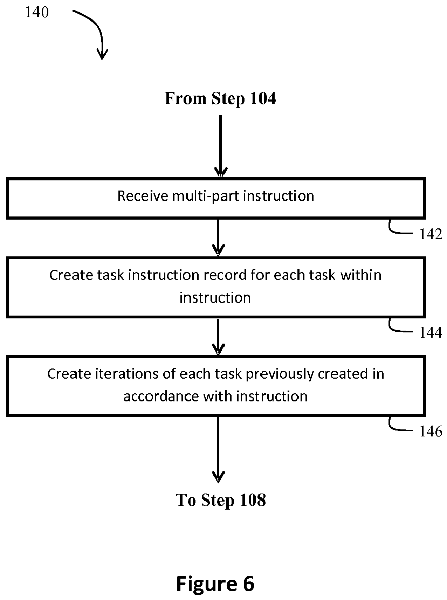

Turning to Figure 6, there is shown a method of operation 140 of the iteration creation system 32 of Figure 5. The method 140 commences when the iteration creation system 32 receives, at Step 142, a multi-part instruction from the multi-part instruction handler 30. The received instruction may have been previously processed by the multi-part instruction handler 30 to determine the veracity and completeness of the instruction, and may be in the form of an instruction record as illustrated in Figure 3A. The instruction may be received by the task iteration division processor 132.

Once the instruction has been received, the multi-part instruction task division processor 130 creates, at Step 144, a task instruction record for each task that is identified within the instruction record. Each task instruction record and the information contained within it may be created by analysis of the initial instruction record task parameters 54, which may be configured to specify each individual task to be completed.

Once task instruction records have been created for each task, each task instruction record is then passed to the task iteration division processor 132 where task iteration instruction records (also referred to as 'iterations') for each of the tasks are created, as shown in Step 146. Each task iteration instruction record and the information contained within it may be created by analysis of the initial instruction record task parameters 54, which may be configured to specify each individual task to be completed as well as the confidence level parameter which can be used to identify the number of iterations that each task requires in accordance with embodiments described above. The number of task iteration instruction records created will therefore be in accordance with the identified confidence level parameter. Once the task iteration instruction records have been created, they are then passed to the selective access queuing system 34 and the method of operation continues at Step 104 of Figure 4.

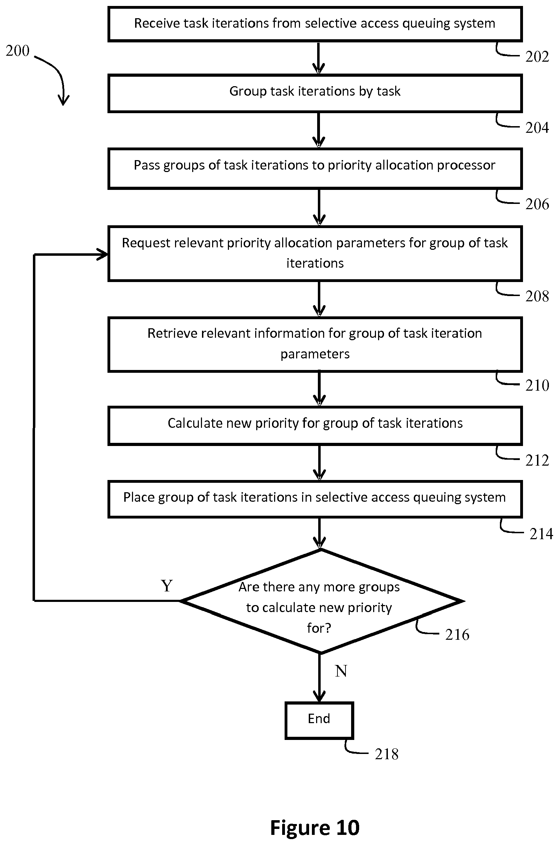

Figure 7 shows in more detail an embodiment of a selective access queuing system 34 of the IAS 10 of Figures 1 and 2. The selective access queuing system 34 firstly comprises a task iteration pool 150. The task iteration pool 150 is configured to receive task iteration instruction records from a plurality of sources. The first of these sources is the iteration creation processor 32, which creates task iterations from the analysis of an initial instruction, as discussed above with reference to Figures 5 and 6. The task iteration pool 150 is also configured to receive task iteration instruction records from the priority allocation system 36. The priority allocation system 36 is configured to recalculate priorities for task iterations and, upon completion, pass these back into the task iteration pool 150. This is discussed in greater detail below with reference to Figures 9 and 10. The task iteration pool 150 is also configured to receive task iteration instruction records from the results processing system 40, where these task iteration instruction records are created as a result of a particular task's confidence level not being met upon completion of all initially created task iterations. Again, this will be discussed in greater detail below with reference to Figure 11.

The task iteration pool 150 is also configured to be coupled to the priority allocation system 36 in order to pass it existing task iteration instruction records, where it is determined that the priority for one or more of the task iterations is to be recalculated, in accordance with embodiments described elsewhere in this description.

There is also provided a dynamic iteration access filter 152 which is coupled to the task iteration pool 150. The dynamic iteration access filter 152 is configured to determine which task iterations, currently in the task iteration pool 150, can be processed by each processor 16A, 16B, 16C upon a request to process a task iteration. To that end, the dynamic iteration access filter 152 is firstly coupled to an iteration request module 154, which is configured to receive iteration processing requests from processors 16A, 16B, 16C in the available processing resource pool. Such a request is, in this embodiment, in the form of a pull request. Once the request is received by the iteration request module 154, the request is passed to the dynamic iteration access filter 152 which then determines the task iterations in the task iteration pool 150 (typically a subset of all of the unallocated task iterations in the task iteration pool) which can be accessed by the requesting processor 16A, 16B, 16C. This is determined at least by identification of the processor 16A, 16B, 16C which makes the request, and identification of the types of task iterations available in the task iteration pool 150. It is further determined by accessing available parameter information relating to previous performance data of the requesting processor 16A, 16B, 16C, namely historical performance data relating to how efficiently and accurately each distributed processing resource (16A, 16B, 16C) has processed task iterations prior to the current task iteration being allocated. This information is retrieved from a database 156 to which the dynamic iteration access filter 152 is coupled. This database 156 houses data relating to all previous tasks performed by the requesting processor 16A, 16B, 16C. The parameter information is provided from the results processing system 40, to which the database 156 is coupled.

There is further provided a filtered iteration queue 158 which is coupled to the dynamic iteration access filter 152. Upon determination of task iterations available to the requesting processor 16A, 16B, 16C, the task iteration instruction record of each of the available task iterations is passed to the filtered iteration queue 158, such that a filtered queue of available task iterations is presented. In some embodiments, there will also be provided a visual read out of the filtered queue (not shown), which enables a user of the IAS 10 to see the filtered list of task iterations available to the requesting processor 16A, 16B, 16C. The filtered iteration queue 158 is additionally coupled to a queue read out module 160 which enables the requesting processor 16A, 16B, 16C to access the filtered queue of available events and subsequently delivers the instruction record of the task iteration which the requesting processor 16A, 16B, 16C selects to be processed. In some embodiments, the requesting processor 16A, 16B, 16C is configured to process the task iteration in the filtered iteration queue 158 which has the highest determined priority level, namely automatically. In other embodiments, the requesting processor 16A, 16B, 16C is configured to select any of the available task iterations in the filtered iteration queue 158 using its own criteria.

The queue read out module 160 may additionally be coupled to the task iteration pool 150 such that when a task iteration is retrieved by a requesting processor 16A, 16B, 16C, a notification is sent to the task iteration pool 150 indicating that the selected task iteration should be removed from the task iteration pool 150 such that it cannot be subsequently retrieved by another requesting processor 16A, 16B, 16C. In some embodiments, the retrieved task iteration is not removed upon such a notification, but instead the status 84 of the task iteration is updated to indicate that it is currently being processed, in accordance with embodiments previously described.

Turning to Figure 8, there is shown a method of operation 170 of the selective access queuing system 34 of Figure 7 which shows how a processor 16A, 16B, 16C is able to request to process a task iteration. The method of operation 170 begins when a pull request to process a task iteration is received, at Step 172, by the iteration request module 154. Whilst this embodiment describes the request in terms of a pull request, any form of request may be used which is suitable to enable the required functionality. Once the pull request has been received, the details of the request are passed to the dynamic iteration access filter 152 which determines, at Step 174, the access parameters of the processor 16A, 16, 16C the transmitted the pull request. These access parameters may comprise a source identification of the processor 16A, 16B, 16C that is making the request.

Once the access parameters have been determined by the dynamic iteration access filter 152, these access parameters are used to retrieve, at Step 176, the dynamic access permissions for the processor 16A, 16B, 16C making the request. The dynamic access permissions are retrieved from the provided database 156 which contains information parameters relevant to the dynamic access permissions. In particular, the access parameters are used to retrieve information which is relevant to the processor 16A, 16B, 16C making the request (i.e. the dynamic access parameters for the processor 16A, 16B, 16C). This may include the accuracy of results of task iterations previously carried out, the time taken for the task iterations to be processed and the tasks which the previously processed task iterations relate to. The dynamic access permissions for a processor 16A, 16B, 16C may also comprise information which identifies particular tasks which the requesting processor 16A, 16B, 16C is configured to be able to process. For example, some processors 16A, 16B may be configured to perform image analysis, and other processors 16C may be configured to perform audio file analysis or text recognition and the dynamic access permissions may be configured such that only a subset of the processors 16A, 16B, 16C which have the technical capability of performing a task may have access to the task. The identification of tasks that each processor is suitable to perform may be included as part of the access parameters determined at Step 174.

The dynamicism of these access permissions is based on the fact that the permissions may be altered in dependence upon the behaviours of the requesting processor 16A, 16B, 16C. For example, if it is found that a processor 16A, 16B, 16C which processes a particular type of task provides efficient and accurate results, the processor 16A, 16B, 16C may be allowed to process that type of task. However, as time progresses, the techniques which the processor 16A, 16B, 16C uses may become outdated and as a result, the efficiency and/or accuracy of the processor 16A, 16B, 16C may degrade. In this case, the processor 16A, 16B, 16C may no longer able to process that type of request. Alternatively, in some circumstances it may be possible that a processor 16A, 16B, 16C becomes **more** adept at conducting a particular task. This may be the case where a processor is configured to use machine learning to improve its accuracy and/or efficiency when processing a particular task. In this case, the processor 16A, 16B, 16C may be able to process a type of task that it has previously not been allowed to process through machine learning of related tasks.

Returning to the method of operation 170 of Figure 8, once the dynamic access permissions have been retrieved, the dynamic iteration access filter 152 then retrieves, at Step 178, the task iterations which may be processed by the requesting processor 16A, 16B, 16C in accordance with its dynamic access permissions, from the task iteration pool 150. The retrieved task iterations comprise any which the requesting processor 16A, 16B, 16C is determined as being able to process, irrespective of the priority level of the task iteration. Once the task iterations have been retrieved, these are then placed, at Step 180, in the filtered iteration queue 158. In some embodiments, the task iterations placed in the filtered iteration queue 158 may be viewable by a user of the IAS 10 by way of a provided display. This is in accordance with embodiments described previously. This may enable an operator of the IAS 10 to determine if relevant task iterations are being processed by a processor 16A, 16B, 16C and where it is determined that it is not, the dynamic access permissions of the processor 16A, 16B, 16C may be reconfig u red.

Once the retrieved task iterations are placed in the filtered iteration queue 158, one of the available task iterations is provided, at Step 182, to the requesting processor 16A, 16B, 16C, in accordance with its dynamic access permissions and filtered iteration queue parameters. This is achieved by the requesting processor 16A, 16B, 16C selecting a task iteration to process from the available task iterations by sending a request to the queue read out module 160 and in response, the queue read out module 160 providing the selected task iteration instruction to the processor 16A, 16B, 16C. In some embodiments, the requesting processor 16A, 16B, 16C will be configured to automatically request the task iteration in the filtered iteration queue 158 which has the highest priority level. In other embodiments, the processor 16A, 16B, 16C may be configured to be able to select any of the task iterations in the filtered iteration queue 158 according to the processor's own criteria.

Once the task iteration has been selected and retrieved by the requesting processor 16A, 16B, 16C, the queue read out module 160 is configured to remove, at Step 184, the retrieved task iteration from the task iteration pool 150. This may be achieved in any way which prevents the retrieved task iteration from being processed in duplication by another processor 16A, 16B, 16C. In accordance with some embodiments previously described, this comprises simply removing the task iteration instruction record from the task iteration pool 150. In other embodiments, it comprises updating the status 84 of the task iteration instruction record 80 to denote that it is currently being processed and therefore may not be retrieved. In such an embodiment, if task iteration is not processed within a particular time limit, the status may be updated again to "awaiting processing" such that the task iteration may be subsequently requested again.

In some embodiments, the IAS 10 may also be configured to provide additional security encryption of particular task iterations which prevents the details of the task iteration from being revealed to undesired processors 16A, 16B, 16C. This may be the case where some of the task iterations to be processed contain sensitive information which should ideally only be accessed by certain processors 16A, 16B, 16C in the processing pool. In such embodiments, the task iterations may be provided with asymmetric private key encryption which allows only authorised processors 16A, 16B, 16C with appropriate information to decrypt the details of the task iteration. The authorised processors may be specified by the instruction generation source 12A as an information parameter within the initial instruction record 50. Such encryption of task iterations may, for example, be performed when the task iterations are placed in the selective access queuing system 34 by the iteration creation system 32. It is to be understood that this is an illustrative example only and any adaptation may be made to the IAS in order to allow such an encryption.

Turning now to Figure 9, there is shown an embodiment of the priority allocation system 36 of the IAS 10 of Figures 1 and 2. The priority allocation system 36 is configured to calculate a real-time priority level for a task iteration to be processed. In this embodiment, there is first provided a task iteration receipt processor 190 which is configured to receive task iterations which are to have a priority level calculated. These task iterations are typically received from the selective access queuing system 34 when it is determined that the task iterations which are awaiting processing should have their priorities recalculated, in accordance with embodiments described above. In some embodiments, the task iteration receipt processor 190 is also configured to receive requests for priority calculations for a task iteration from the results processing system 40. This may be the case when the results processing system 40 creates additional task iterations to be processed and is configured to obtain an initial priority level for these new iterations. In additional embodiments, the priority allocation system 190 may also receive requests for priority calculations for task iterations when a task iteration is created by the iteration creation system 32. This may correspond to Step 108 shown in Figure 4, where an initial priority level is assigned to the newly created task iteration.

The priority allocation system 36 of Figure 9 also comprises a priority allocation processor 192 which is coupled to the task iteration receipt processor 190. The priority allocation processor 192 is configured to receive the task iteration instruction record 80 and to calculate, based on supplied information, an appropriate priority level for the task iteration. The supplied information may comprise, for example, information included within the task iteration instruction record, such as the instruction generation source 12A which requested the initial instruction, and a currently assigned priority level of the task iteration. It may further comprise information relating to previously processed task iterations. This information is retrieved by use of a priority parameter processor 194 which is coupled to the priority allocation processor 192. The priority parameter processor 194 is configured to receive information regarding the priority of processed task iterations from the results processing system 40 to which it is coupled. The method by which such priority parameter information is determined is discussed further with reference to Figure 11. Upon receipt of this priority parameter information, the priority parameter processor 194 then stores this priority parameter information in the priority parameter database 38 to which it is coupled, suitable such that the information can be retrieved at a later point. When the priority allocation processor 192 is to assign a new priority level to a particular task iteration, the priority allocation processor 192 transmits a request for information relevant to the task iteration to the priority parameter processor 194, which then retrieves the information from the priority parameter database 38, before supplying it to the priority allocation processor 192. Once this information has been supplied, the priority allocation processor 192 then calculates the new priority level for the task iteration, before passing the task iteration to the selective access queuing system 36 where the task iteration awaits processing.

Figure 10 shows a method of operation 200 of the priority allocation system 36 of Figure 9 wherein task iterations are received and a new priority level is calculated and assigned to the received task iterations. The method 200 begins when task iterations are received at Step 202, by the task iteration receipt processor 190. These iterations may be received from the selective access queuing system 34 in some embodiments. In other embodiments, the task iterations may additionally or alternatively be received from the results processing system 40 and/or the iteration creation system 32. Once the task iterations have been received, the task iteration receipt processor 190 then groups, at Step 204, the task iterations by the task they relate to. This may be done in cases where all task iterations of particular tasks should be given the same priority and by grouping the task iterations, the required processing resource is advantageously reduced, as only one calculation is required rather than having to calculate the priority for each task iteration separately. The determination of which task iterations belong to the same task may be achieved, for example, by comparison of the task iteration instruction records and noting where there are matching instruction parameters. For this purpose, one of the task parameters 54 included in the task iteration instruction record may be a unique task identifier, which can be allocated to all iterations of a particular task. In other embodiments, it may be preferable to omit Step 204 and calculate the priority level of each task iteration individually.

Returning to the method 200 of Figure 10, once the task iterations have been grouped, they are then passed, at Step 206, to the priority allocation processor 192. Upon receipt of the grouped (or otherwise) task iterations, the priority allocation processor 192 then requests, at Step 208, priority allocation parameter information for the first group of received task iterations, from the priority parameter processor 194. The request is for all relevant information which is necessary for the priority allocation processor 192 to calculate a priority level for these task iterations. This information may, for example, comprise the instruction generation source 12A that the task iteration originated from and the amount of time spent processing the task so far. In some embodiments, the relevant information may also comprise the amount of time spent processing all tasks that have been requested by the same instruction generation source 12A. This may be useful in embodiments where it is advantageous to monitor the amount of processing resource consumed by tasks requested by a particular instruction generation source 12A. It is to be appreciated that the examples of relevant information given above are illustrative examples only, and the relevant information may comprise any information which may be used to determine an appropriate priority level for the task iteration.

Following the request, the priority parameter processor 194 then retrieves, at Step 210, the relevant information for the group of task iterations from the priority parameter database 38. To determine which information is relevant, the priority parameter processor 194 may analyse the task iteration instruction record task parameters of the supplied task iterations to identify identifying information, before retrieving information from the priority parameter database 38 which has been indicated as relating to that task iteration or group of task iterations. This may for example comprise retrieving information for records with the same task identifier as the supplied task iteration. Once the relevant information has been retrieved by the priority parameter processor 194, this is then supplied to the priority allocation processor 192.

Upon receipt of the information, the priority parameter processor 194 then proceeds to calculate, at Step 212, the new priority level for the task iteration or group of task iterations. This calculation may be performed using any appropriate algorithm which matches the demands of the IAS 10. For example, the calculation may involve determining the total time spent on a particular task and, if it is above a certain threshold, the task iteration or group of task iterations may be given a low priority. Conversely, if the time spent is below a certain threshold, the task iteration or group of task iterations may be given a high priority. Additionally or alternatively, the task iterations or group of task iterations may be compared to other tasks and the priority of each may be queued in order of the least amount of time spent on the particular task. Further alternatively, the task iterations may be assigned a priority level based on the remaining number of task iterations which are presently required to complete that task, and where this number is high (according to a predetermined threshold), the priority level may be assigned as high.

In some embodiments, it may be preferable to calculate the priority level in such a manner that the calculation has a "smoothing" parameter which prevents the priority level from being excessively changed as a result in a small change in the relevant information. In particular, in the case where the priority level calculation results in a numerical output where there are a plurality of factors taken into account in the priority level calculation, it may be the case that a priority level is expected to fluctuate frequently, which may be disruptive when deciding which task iterations should be processed in preference to others. The smoothing parameter may act within the calculation to prevent such fluctuations.

Returning to the method 200 of Figure 10, once the new priority level has been calculated for the task or group of task iterations, the priority level is updated in the relevant task iteration instruction records and the records are then placed, at Step 214, in the selective access queuing system 36, where they await processing by a processor 16A, 16B, 16C. The method 200 then proceeds to determine, at Step 216, whether there are any further task iterations or groups of task iterations to calculate a new priority level for. If it is determined that there is, the method 200 then proceeds to return to Step 208, where relevant information for this task iteration or group of task iterations is requested. If however, it is determined at Step 216 that there are no further task iterations to calculate a priority for, the method 200 then proceeds to finish at Step 218. The method 200 then awaits the receipt of further task iterations to calculate a priority level for.

Figure 11 shows an embodiment of the results processing system 40 of the IAS 10 of Figures 1 and 2. The results processing system 40 is configured to receive the processed task iterations from the processing resource pool 16A, 16B, 16C and determine whether the supplied processed task iterations are sufficient to classify the task and/or instructions that the task iterations relate to as being processed in accordance with a confidence level parameter. Where the task and/or iterations are able to be classed as processed in accordance with a confidence level parameter, the results processing system 40 makes the results available for retrieval by the instruction generation source 12A via the results request handler 44. Where the task and/or iterations are not able to be classed as processed in accordance with a confidence level parameter as the required confidence level is not met, the results processing system 40 then may generate new task iterations in order to allow the required confidence level to be achieved. Additionally, the results processing system 40 may be configured to provide priority information to the priority allocation system 36 which may be used to calculate the priority level for a particular task iteration, in accordance with embodiments described elsewhere. Further additionally, the results processing system 40 may provide parameter information to the selective access queuing system 34 which may be used to determine which processors 16A, 16B, 16C are able to retrieve a particular task iteration for processing.

There is first provided a task results receipt processor 230 which is configured to receive processed task iterations from the processing resource pool 16A, 16B, 16C. Upon receipt of the processed task iterations, the results receipt processor 230 may be configured to identify relevant information for the calculation of the priority of further task iterations from the information parameters of the task iteration instruction record. This may, for example, include retrieving the amount of time spent on a particular task iteration. The task results receipt processor 230 may then be configured to be communicably coupled to the priority allocation system 36 so that this relevant priority-determining information may be stored in the priority parameter database 38 so it may be used in priority level calculations. The task results receipt processor 230 is also coupled to the results database 42 which is configured to store the task iteration instruction records of processed task iterations. Upon receiving a processed task iteration, the task results receipt processor may be configured to retrieve, from the results database 42, records of all processed task iterations relating to the newly received processed task iteration. This retrieved information may be used to determine whether the minimum number of iterations for the relevant task have been completed such that the confidence level parameter may be met. The task results receipt processor 230 is also configured to be able to transmit store processed task iteration instruction records in the results database 42 such that they may be retrieved at a later date.

There is also provided an agreement verification processor 232 which is coupled to the task results receipt processor 230. The agreement verification processor 232 is configured to receive a plurality of processed task iteration instruction records which relate to the same task and compare the results of each processed task iteration in order to determine whether the results are in agreement in accordance with a specified confidence level parameter. This may be achieved by comparison of the results of each task iteration in order to determine whether the results are the same for each of the iterations. This may, for example, involve comparison of items identified within an image, or comparison of the results of a numerical calculation. The results for each provided task iteration may be compared in order to ascertain the number of results which are in agreement. This is then compared to the required confidence level parameter 66 in order to determine whether the confidence level parameter condition is met. For example, where there are four iterations performed for a particular task, the confidence level parameter 66 may require that 75% of the results are in agreement (i.e. 3 of the 4 task iterations each arrive at the same result or to a 75% confidence). The agreement verification processor 232 is also configured to be able to store processed task iteration instruction records in the relevant results database 42.

In some embodiments of the present invention, it may not be required that the results of two task iterations be identical in order for them to be deemed in agreement. In such embodiments, the agreement verification processor 232 may be configured to identify the results of two task iterations as being in agreement where any differences between the two results are determined to be immaterial. Such immateriality may be determined by the inclusion of tolerance parameters (not shown) within the task iteration instruction record 50 which indicate a range of results which may be considered equivalent to the actual result. In an example where the result of a task iteration is numerical, the tolerance may be an absolute value or percentage. Where the result of another task iteration lies within this tolerance, the two results will be deemed to be in agreement. In such an embodiment, the agreement verification processor 232 may be configured to identify whether the result of a second task iteration falls within the tolerance range of a first task iteration in order to identify whether the two results are in agreement. Where the result of a task iteration is qualitative in nature, the task iteration instruction record may include a list of results which are deemed to be equivalent. Returning to the image colour example described above, in some embodiments the task instruction record may be configured to consider a classification result of 'yellow' as being equivalent to a colour classification of 'chartreuse,' and therefore that two task iterations with these different results are still considered to be in agreement. Again, in such an embodiment, the agreement verification processor 232 may be configured to identify whether the result of a second task iteration should be equivalent to the result of a first task iteration in order to determine whether the two results are in agreement.

The agreement verification processor 232 is also configured to be coupled to a processing pool filter parameter engine 234 which is provided within the results processing system 40 of Figure 11. The processing pool filter parameter engine 234 is configured to receive processed task iterations and access relevant information in the task iteration instructions records 80 which may be used to determine which processors 16A, 16B, 16C are able to access particular task iterations that are in the selective access queuing system 34. Once the information is received, this information is passed to the database 156 in the selective access queuing system 34 where it is stored for later retrieval. The processing pool filter parameter engine 234 may also be configured to receive processed task iterations directly from the task results receipt processor 230 for the same purpose.

There is additionally provided in the results processing system 40 of Figure 11, a supplementary task iteration generation processor 236 which is configured to receive instructions from the agreement verification processor 232 which instruct the supplementary task iteration generation processor 236 to generate new task iterations for a task which has been determined to not be in accordance with the specified confidence level parameter discussed above. The instructions received will be configured to provide enough information such that new task iterations for a particular task may be generated, and subsequently processed by a processor 16A, 16B, 16C in the processing resource pool. This may include providing an identifier of the instruction generation source 12A that provided the initial instruction, the relevant instruction or task identifier, the task to be carried out and a record of processors 16A, 16B, 16C that have already carried out an iteration of this task. The supplementary task iteration generation processor 236 may be configured to send a priority calculation request for the newly created task iteration such that an appropriate priority level may be assigned to the task iteration. Once a new task iteration is created, it is then sent to the selective access queuing system 34 to which the supplementary task generation processor 236 is coupled, where the new task iteration awaits processing in accordance with embodiments described previously.

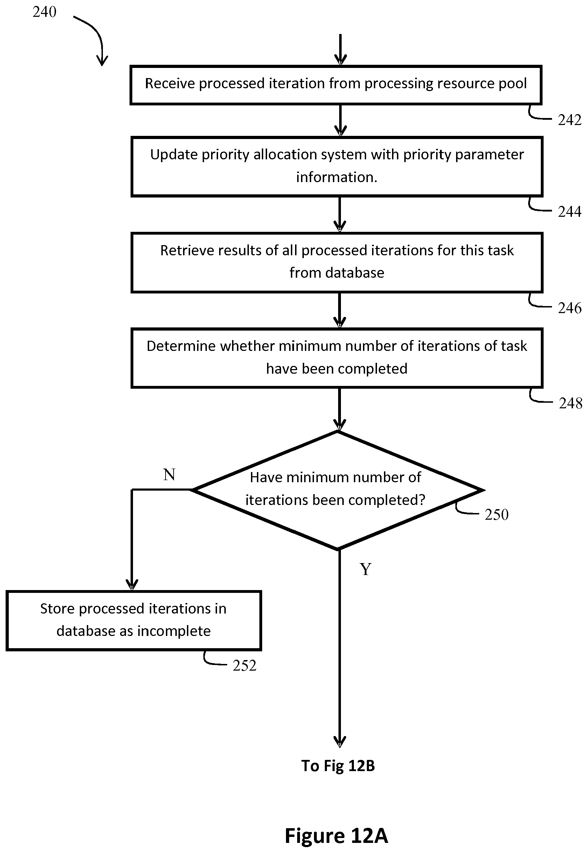

Turning to Figure 12A, there is shown a method of operation 240 of the embodiment of the results processing system 40 of Figure 11. The method 240 begins when a processed task iteration is received, at Step 242, from a processor 16A, 16B, 16C in the processing resource pool by the task results receipt processor 230. Upon receipt of the task iteration, the results receipt processor 230 then updates, at Step 244, the priority allocation system 36 with priority parameter information. This may be achieved by analysis of the processed task iteration instruction record for relevant information contained within its information parameters. Such information may include the amount of time spent processing the task iteration and the processor 16A, 16B, 16C that carried out the processing. This information may then be used at a later point by the priority allocation system 36 to calculate the priority for one or more task iterations.

Once the priority allocation system 36 has been updated, the method 240 then proceeds to retrieve, at Step 246, the results of all processed task iterations from the results database 42. This may be achieved, for example, by accessing a task identifier which is provided within the task iteration instruction record and retrieving all task iteration records contained within the results database 42 which have the same task identifier. Once these records have been retrieved, the results receipt processor 230 then determines, at Step 250, whether the minimum number of task iterations for the relevant task have been completed. This is performed in order to determine whether it is possible for the confidence level parameter for the task to be achieved. For example, if the required confidence level for a particular task requires that four task iterations be processed, the results receipt processor 230 is configured to determine whether four iterations of the task have indeed been processed. Information regarding the minimum number of iterations may be included within the task iteration instruction record. If it is determined that the minimum number of iterations have not been processed, then the method 240 proceeds to store, at Step 252, a copy of the processed task iteration instruction record received from the processor 16A, 16B, 16C in the results database 42. This is stored such that the task iteration instruction record may be retrieved by the task results receipt processor 230 at a later time. The iteration is stored in the database with a status parameter signifying that the task is 'incomplete'. Concurrently, the task iteration instruction record is sent to the processing pool filter parameter engine 234 where filtering parameters for the task iteration are determined, at Step 254, for relevant processors 16A, 16B, 16C. This may comprise determining which processor 16A, 16B, 16C has processed a particular task iteration in order to prevent that processor from processing any further iterations of that task. Once the filtering parameters are determined, the parameters are passed, at Step 256, to the selective access queuing system 34, where they are stored in the relevant database 156 to be retrieved upon receiving a request to process a task iteration.

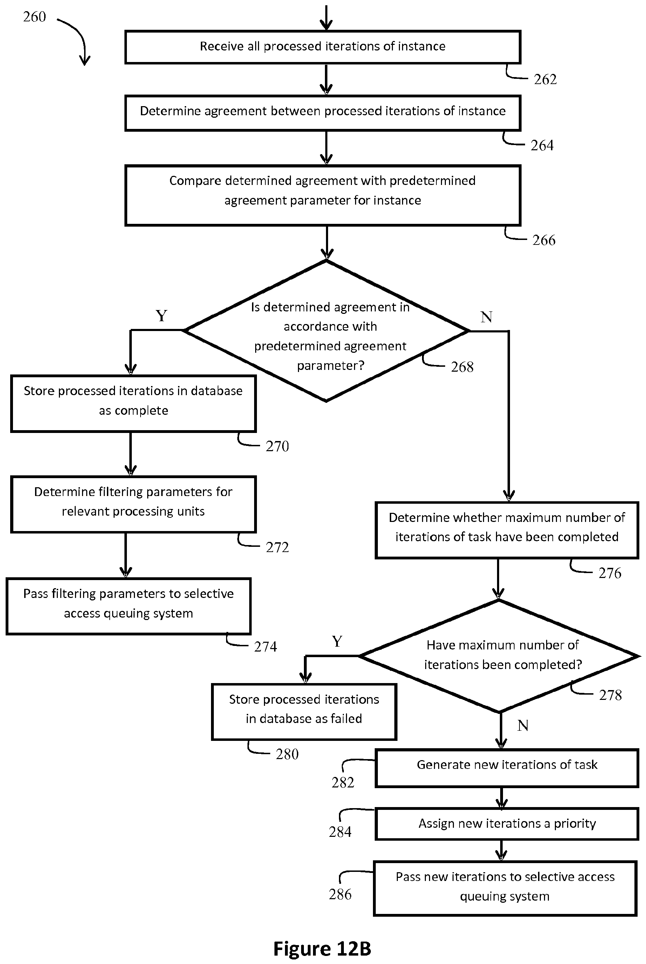

If it is determined at Step 250 of the method 240 of Figure 12A that the minimum number of task iterations of the relevant task have been completed, the system then proceeds to the method of operation 260 of Figure 12B. The method 260 begins when all the processed iterations of a particular task are received, at Step 262, by the agreement verification processor 262. Once the task iterations have been received, the agreement verification processor 262 then determines, at Step 264, the degree of agreement between the task iterations. This may comprise determining the result yielded by each of the processed task iterations (contained within one of the iteration information parameters 88) and ascertaining whether the result of one task iteration is the same as one or more of the other processed task iterations. The comparison may comprise returning a percentage agreement (current confidence level) for the results which has the highest agreement. For example, if there are five processed iterations, and three iterations yield the same result and two iterations yield a different result, then the determined agreement (or current confidence level) may be classed as 60%. Once the determined agreement (current confidence has been calculated, the method 260 then proceeds to compare, at Step 266, this to the predetermined confidence level parameter 66 as provided by the instruction generation source 12A. Once the two are compared, the agreement verification processor determines, at Step 268, whether the calculated agreement is in accordance with the confidence level parameter.

If it is determined that they are in agreement, then the processed iterations are then stored, at Step 270, in the results database 42, with a task status parameter (not shown) indicating that the task that the task iterations relate to has been completed. In some embodiments, the processed task iteration instruction records may be concatenated into a single task instruction record to be stored in the results database 42. This concatenated task instruction record may indicate that the task has been completed and the result of the task, where the result of the task is determined to be that which is agreed upon by the greatest number of task iterations. Concurrently, the task iteration instruction records are sent to the processing pool filter parameter engine 234 where filtering parameters for the task iterations are determined, at Step 272, for relevant processors 16A, 16B, 16C. This may comprise determining whether a particular processor 16A, 16B, 16C accurately processed a particular task iteration, where accuracy is determined by ascertaining whether the result which was yielded by a particular processor 16A, 16B, 16C was in agreement with the result determined to be correct as described above. Where the result is in agreement, the filtering parameter associated with the processor 16A, 16B, 16C may indicate that it provides accurate results for a particular task category. Conversely, where the result is not in agreement, the filtering parameter associated with the processor 16A, 16B, 16C may indicate that it provides inaccurate results for a particular task category. Once the filtering parameters are determined, the parameters are passed, at Step 274, to the selective access queuing system 34, where they are stored in the relevant database 156 to be retrieved upon receiving a request to process a task iteration.

Returning to Step 268 of Figure 12B, if it is determined that the determined agreement is not in accordance with the predetermined confidence level parameter, the method 260 then proceeds to determine, at Step 276, 278, whether a maximum number of iterations for a particular task has been reached. The maximum number of iterations may be provided in the initial instruction record provided by the instruction generation source 12A. If it is determined that the maximum number of iterations has been reached, with no accordance on an agreed result, the method 260 proceeds to store, at Step 280, the processed iterations in the results database 42, with the task status indicating that the processing has failed. As above, the processed task iteration instruction records may be concatenated into a single task instruction record to be stored in the results database 42. This concatenated task instruction record may indicate that the task has failed due to lack of conclusive result. Optionally, a result of the task may be provided, where the result of the task is determined to be that which is agreed upon by the greatest number of task iterations, even though there is not sufficient agreement to achieve the required confidence level.

The results database can therefore collate the results of each of the tasks of the multifunction instruction and can provide not only the status of a particular task via the task status parameter (not shown but discussed above) but also an instruction status (not shown) through an aggregation of all of the task statuses for that particular instruction. If any of the tasks of the instruction have failed then the instruction has a 'failed' status. If all of the tasks have been completed to the required confidence level then the status of the instruction is 'completed'. If any of the tasks are still pending then the instruction status is 'pending'.

Returning to Step 278, if it is determined that the maximum number of iterations has not yet been reached, the method 260 then proceeds to generate, at Step 282, at least one new iteration for the task, whilst also storing the processed iterations in the results database 42, where this storing is performed in accordance with Steps 252, 254 and 256 of Figure 12A. In order to generate new task iterations, the processed task iteration instruction records are passed to the supplementary task generation processor 236. This then may access relevant information from the processed task iteration instruction record in order to duplicate the required information in a new task iteration instruction record. Relevant information may include information parameters identifying the instruction generation source 12A, the task to be achieved, a maximum number of iterations and a task identifier, although is to be appreciated that this is not an exhaustive list.

One the new task iteration has been generated, the method 260 then proceeds to assign, at Step 284, the new task iteration with an initial priority. This may be achieved by simply assigning it with the same priority as the most recently processed task iteration for the task that the new task iteration relates to. Alternatively, there may be provided a default priority level that all such newly created iterations are issued with. Further alternatively, the iterations may be provided to the priority allocation system 36, such that a priority may be allocated to them using a method such as that described in Figure 10. Once the new task iteration or iterations have been assigned a priority, the new iterations are passed, at Step 286, to the selective access queuing system 34, where the new iterations await processing. If the new iterations were previously passed to the priority allocation system 36 to assign them a priority, they may be directly passed to the selective access queuing system 34 from that location, in accordance with the method of Figure 10.

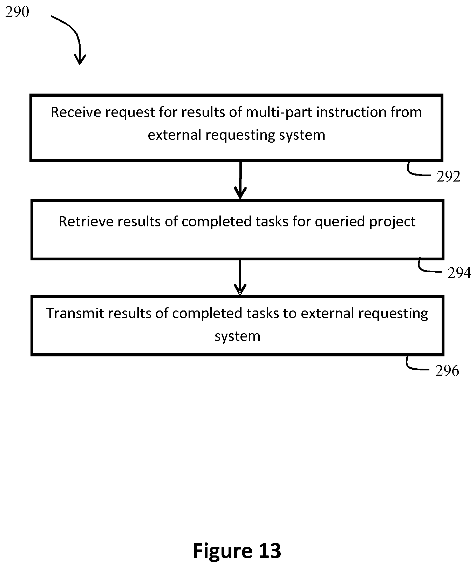

Turning now to Figure 13, there is shown a method of operation 290 by which an instruction generation source 12A, may retrieve a result of a particular instruction or task. The method 290 begins when a request for the results of an instruction or task are received, at Step 292, by the request results handler 44 of the IAS 10. The IAS may be configured to determine whether received communications relate to an instruction or a results request and direct the communication accordingly. Once the request is received by the results request handler 44, it then proceeds to retrieve, at Step 294, the results for the queried instruction or task from the results database 42. If a request is made to retrieve all results relating to a particular instruction which comprises a plurality of tasks, the results request handler 44 may be configured to retrieve results relating to all tasks within that instruction. Alternatively, if a request is made to retrieve results for a particular task, the retrieved results may relate to that particular task only. Once the results have been retrieved, the results request handler 44 then transmits, at Step 296, the retrieved results back to the instruction generation source 12A that made the request. It is to be appreciated that in some embodiments, the IAS 10 may be configured to only provide results to the instruction generation source that generated the initial instruction. In other embodiments, the results may be provided to instruction generation sources 12A, 12B, 12C other than the source which generated the initial instruction.

In some embodiments, the results request handler 44 may be configured to only provide results where the status of the task or instruction that the request relates to has been denoted as completed or failed. If the requested task or instruction is not yet complete, the results request handler 44 may be configured to inform the requesting instruction generation source 12A that the task or instruction has not yet been completed and no results information is provided. In other embodiments, the results request handler 44 may be alternatively configured to be able to provide partial results, where some task iterations have been processed, but a sufficient amount of task iterations have not yet been processed for the result to be in accordance with the predetermined confidence level. In this case, the results of the task iterations may be supplied with a notification that the result is incomplete. Similarly, where it has been determined (in accordance with embodiments previously described) that the processing has failed, the results request handler 44 may be configured to simply notify the requesting instruction generation source 12A, that the processing has failed, with no provision of partial results. Alternatively, the results request handler 44 may also be configured to provide partial results such as, for example, providing the result which was produced by the most task iterations, even if this agreement is not sufficient to match the required confidence level.

Furthermore, it will be understood that features, advantages and functionality of the different embodiments described herein may be combined where context allows.

Having described several exemplary embodiments of the present invention and the implementation of different functions of the device in detail, it is to be appreciated that the skilled addressee will readily be able to adapt the basic configuration of the system to carry out described functionality without requiring detailed explanation of how this would be achieved. Therefore, in the present specification several functions of the system have been described in different places without an explanation of the required detailed implementation as this not necessary given the abilities of the skilled addressee to code functionality into the system.

## Claims

1. An instruction processing system for processing instructions (50) received from a remotely located instructing system (12A), wherein each instruction comprises a plurality of tasks, a confidence level parameter (66) associated with each task and a maximum number of iterations parameter (68), each task requiring a plurality of instances of the task to be processed in order to make a determination of confidence in the results of the processing the task, the instruction processing system including an iteration allocation system (10) for processing the instruction (50), the iteration allocation system (10) using a remotely located pool of distributed data processors (16A, 16B, 16C) operatively coupled to the iteration allocation system (10) for processing an instance of at least one of the plurality of tasks, the iteration allocation system comprising:
a multi-part instruction handler (30) arranged to divide the received instruction into the plurality of tasks and to forward each task to an iteration creation system (32) for processing each task separately;
the iteration creation system (32) for processing a received task to create a plurality of task iteration instruction records (80) each representing an instance of the task,
a selective access queuing system (34) for temporarily holding all task iteration instruction records (80) and selectively providing one of the task iteration instruction records (80) to a requesting processor (16A; 16B; 16C) of the pool of distributed data processors (16A, 16B, 16C);
a results processing system (40) for processing received results of task iteration instruction records processed by the pool of distributed data processors (16A, 16B, 16C), wherein the results processing system (40) comprises:
a task results receipt processor (230) for receiving the results of a processed task iteration instruction record (80) and storing the results in a results database (42);
an agreement verification processor (232) arranged to:
determine a current confidence level value associated with the degree of agreement between all of the results of received task iteration instruction records (80) relating to the same task;
compare the current confidence level value with the confidence level parameter (66) of that task;
change a task status parameter of the associated task to 'completed' and store the same in the results database (42) if the current confidence level meets the value of the required confidence level parameter (66);
change a task status parameter of the associated task to 'failed' and store the same in the results database (42) if the current confidence level does not meet the value of the required confidence level parameter (66) and the maximum number of iterations (68) for the associated task have been carried out; and
generate an new iteration instruction for the creation of a new task iteration record if the current confidence level does not meet the value of the required confidence level parameter (66) and the maximum number of iterations (68) for the associated task has not been carried out;
a supplementary task iteration generation processor (236) for generating new task iteration records (80), the supplementary task iteration generation processor (236) being responsive to receiving the new iteration instruction from the agreement verification processor (232), to create the new task iteration record (80) and pass the new task iteration record (80) to the selective access queuing system (34); and
a results request handler (44) configured to receive requests from an instruction generation source (12A, 12B, 12C) for the results of a particular processed instruction, retrieve the results of a processed instructions and provide the results to the instruction generation source (12A, 12B, 12C).

2. The instruction processing system of Claim 1, wherein the selective access queuing system (34) is arranged to provide one of the task iteration instruction records (80) to a requesting processor (16A; 16B; 16C) of the pool of distributed data processors (16A, 16B, 16C) from a subset of the iteration instruction records (80); and the selective access queuing system (34) comprises:
a task iteration pool (150) arranged to temporarily store iteration instruction records (80) prior to their allocation to the requesting processor;
a parameter information database (156) configured to store historical performance data relating to how efficiently and accurately each data processor of the pool of distributed data processors (16A, 16B, 16C) has processed previous iteration instruction records (80);
an iteration request module (154) configured to receive a request from the requesting processor (16A, 16B, 16C) to process an unallocated task iteration instruction record (80) from the task iteration pool (150); and
a dynamic iteration access filter (152) arranged to be responsive to the received request to determine and retrieve the subset of iteration instruction records (80) that may be made available to the requesting processor (16A; 16B; 16C) and arrange the retrieved subset of iteration instruction records in an output queue, the dynamic iteration access filter (152) being arranged to determine the subset by consideration of processor information relating to:
the processing capabilities of the requesting processor (16A; 16B; 16C);
previous processing of iteration instruction records (80) by the requesting processor; and
efficiency and accuracy data of the requesting processor in previously processing task iteration instruction records (80); the processor information being obtained from the parameter information database (156).

3. The instruction processing system of Claim 2, wherein the task results receipt processor (230) is arranged to analyse the result of the received processed task iterations instruction record (80) to determine performance information relevant to the efficiency and accuracy of the processor (16A; 16B; 16C) from which the results were received and to forward the performance information to the parameter information database (156) for storage.

4. The instruction processing system of Claim 2 or 3, wherein the iteration creation system (32) is arranged to create a number of iteration instruction records (80) for each task which is determined by the task parameters (54) for the respective task, with at least one of these task parameters (54) being the associated confidence level parameter (66) for that task.

5. The instruction processing system of Claim 4, wherein the iteration creation system (32) is arranged to create a minimum number of iteration instruction records (80) of each task when the confidence level is 50% and a maximum number when the confidence level is approximately 100%.

6. The instruction processing system of any of Claims 2 to 5, further comprising a priority allocation system (36) for calculating a dynamic priority level of an associated task iteration instruction record (80) in the task iteration pool (150), where an associated dynamic priority level is determined in consideration of data relating to previously processed task iteration records (80).

7. The instruction processing system of Claim 6, wherein the task results receipt processor (230) is arranged to determine priority information relevant to the priority level of unprocessed task iterations and to pass the priority information to the priority allocation system (36).

8. The instruction processing system of Claim 6 or 7, wherein the supplementary task iteration generation processor (236) is arranged to send a priority calculation request for a priority level of a newly created task iteration record (80) to the priority allocation system (36) and to assign a new priority level received from the priority allocation system (36) to the newly created task iteration record (80).

9. The instruction processing system of any of Claims 6 to 8, wherein the priority allocation system (36) is arranged to calculate the dynamic priority level of an associated task iteration instruction record (80) by considering information included with the task instruction record (80) including the identity of the instruction generation source (12A) and the currently assigned level of priority (70).

10. The instruction processing system of any of Claims 6 to 9, further comprising an filtered iteration queue coupled to the dynamic iteration access filter (152) and wherein the dynamic iteration access filter (152) is arranged to place the unallocated filtered task iteration records (80) in the filtered iteration queue in order of the priority of each unallocated filtered task iteration record (80), with the task iteration record (80) having the highest priority being arranged to be made available for selection first by the requesting distributer data processor (16A; 16B; 16C).

11. The instruction processing system of any preceding claim, wherein the results processing system (40) further comprises a processing pool filter parameter engine (234) configured to access relevant information in received task iteration instruction records (80) which may be used to determine which processors (16A; 16B; 16C) of the pool of distributed data processors (16A, 16B, 16C) are able to access particular unallocated task iteration records that are in the selective access queuing system 34, and to send this information to the selective access queuing system 34.

12. The instruction processing system of Claim 11, wherein the processing pool filter parameter engine (234) is arranged to identify processors (16A; 16B; 16C) of the pool of distributed data processors (16A, 16B, 16C) which have already processed an task iteration instruction record (80) relating to a particular task and notify the selective queuing system of the identity of these processors to prevent them from selecting and processing another task iteration instruction record (80) relating to that specific task.

13. The instruction processing system of any preceding claim, wherein each task iteration instruction record (80) comprises:
global parameters (52) applicable to all tasks associated with that instruction;
at least one set of task parameters (54) relevant to a specific task contained in the instruction record (50); and
at least one set of iteration parameters (82) comprising data relevant to each task iteration, the at least one set of iteration parameters (82) including an initial value for an associated dynamic priority level (70) of the task iteration.

14. The instruction processing system of any preceding claim, wherein the results database (42) is arranged to determine the current status of the instruction as:
'failed' if any of the tasks associated with the instruction have a 'failed' status;
'completed' if all of the tasks associated with the instruction have a 'completed' status; and
'pending' if any of the tasks associated with the instruction have a 'pending' status; and
the results request handler (44) is arranged to retrieve the status of the instruction from the results database (42) and provide the same to the instruction generation source (12A, 12B, 12C).

15. A method of processing instructions (50) received from a remotely located instructing system (12A), wherein each instruction comprises a plurality of tasks, a confidence level parameter (66) associated with each task and a maximum number of iterations parameter (68), each task requiring a plurality of instances of the task to be processed in order to make a determination of confidence in the results of the processing the task, the method including using a remotely located pool of distributed data processors (16A, 16B, 16C) for processing an instance of at least one of the plurality of tasks, the method comprising:
dividing the received instruction into the plurality of tasks and forwarding each task for separate processing;
processing a received task to create a plurality of task iteration instruction records (80), each record (80) representing an instance of the task,
temporarily storing all unallocated task iteration instruction records (80) and selectively providing one of the task iteration instruction records (80) to a requesting processor (16A; 16B; 16C) of the pool of distributed data processors (16A, 16B, 16C);
receiving a result of a task iteration instruction record (80) processed by one of the pool of distributed data processors (16A, 16B, 16C);
processing the received result by:
storing the result of the processed task iteration instruction record (80) in a results database (42);
determining a current confidence level value associated with the degree of agreement between all of the results of received task iteration instruction records (80) relating to the same task;
comparing the current confidence level value with the confidence level parameter (66) of that task;
changing a task status parameter of the associated task to 'completed' and storing the task status parameter in the results database (42) if the current confidence level meets the value of the required confidence level parameter (66);
changing a task status parameter of the associated task to 'failed' and storing the task status parameter in the results database (42) if the current confidence level does not meet the value of the required confidence level parameter (66) and the maximum number of iterations (68) for the associated task have been carried out; and
generating an new iteration instruction for the creation of a new task iteration record (80) if the current confidence level does not meet the value of the required confidence level parameter (66) and the maximum number of iterations (68) for the associated task has not been carried out;
generating a new task iteration record (80) in response to creation of the new iteration instruction, and temporarily storing the new task iteration record (80) with the existing unallocated task iterations;
receiving a request from an instruction generation source (12A, 12B, 12C) for the results of a particular processed instruction,
retrieving the results of a processed instructions from the results database; and
providing the results to the instruction generation source (12A, 12B, 12C).
